# EUROPEAN PATENT APPLICATION

(11) **EP 4 486 026 A1**
(43) Date of publication of application: **01.01.2025**
(21) Application number: 23777800.6
(22) Date of filing: 10.03.2023
(51) Int. Cl.: H04W 64/00

(54) **METHOD, APPARATUS AND SYSTEM FOR EXECUTING NETWORK MANAGEMENT SERVICE INTENTION**

(30) Priority: 28.03.2022 CN 202210315239
(71) Applicant: Huawei Technologies Co., Ltd., Shenzhen, Guangdong 518129 (CN)
(72) Inventor: YING, Jiangwei, Shenzhen, Guangdong 518129 (CN); XU, Shengfeng, Shenzhen, Guangdong 518129 (CN); LI, Meng, Shenzhen, Guangdong 518129 (CN); ZHOU, Runze, Shenzhen, Guangdong 518129 (CN)
(74) Representative: MERH-IP Matias Erny Reichl Hoffmann Patentanwälte PartG mbB
(86) International application number: PCT/CN2023/080908
(87) International publication number: WO 2023/185423

(57) **Abstract**

Embodiments of this application provide a wireless communication method and an apparatus. The method includes: A first device receives a first request message from a second device. The first request message is used to request relative location information between a first terminal device and a second terminal device, or the first request message is used to request measurement information between the first terminal device and the second terminal device. The measurement information is used to determine the relative location information. The relative location information includes at least one of the following location information: relative positioning information, relative distance information, and relative angle information. The first device sends the relative location information or the measurement information to the second device in response to the first request message, so that the measurement information or the relative information may be obtained through an interface between terminal devices, and absolute location information of the terminal devices may not need to be obtained. This supports more application scenarios.

## Description

This application claims priority to Chinese Patent Application No. 202210315239.2, filed with the China National Intellectual Property Administration on March 28, 2022 and entitled "WIRELESS COMMUNICATION METHOD AND APPARATUS", which is incorporated herein by reference in its entirety.

### TECHNICAL FIELD

Embodiments of this application relate to the communication field, and more specifically, to a wireless communication method and an apparatus.

### BACKGROUND

Currently, a measurement signal may be sent and received between a network device and a terminal device, to position the terminal device. However, in some communication scenarios, relative location information between terminal devices is more important than absolute location information of a terminal device. For example, in a vehicle-to-everything scenario, if an application such as a vehicle distance alarm needs to be implemented, a communication system needs to obtain relative location information between vehicles. Therefore, how to obtain relative location information between devices becomes an urgent problem to be resolved.

### SUMMARY

Embodiments of this application provide a wireless communication method and an apparatus, to obtain relative location information between devices, and further support more application scenarios.

According to a first aspect, a wireless communication method is provided. The method may be performed by a first device or a chip in the first device. The method includes: The first device receives a first request message from a second device. The first request message is used to request relative location information between a first terminal device and a second terminal device, or the first request message is used to request measurement information between the first terminal device and the second terminal device. The measurement information is used to determine the relative location information. The relative location information includes at least one of the following location information: relative positioning information, relative distance information, and relative angle information. The first device sends the relative location information or the measurement information to the second device in response to the first request message.

Optionally, the measurement information or the relative location information is obtained through an interface between the first terminal device and the second terminal device.

It should be understood that, that the first device responds to the first request message means that the first device sends, to the second device based on content that is requested by using the first request message, the content that is requested. To be specific, if the first request message is used to request the measurement information, the first device sends the measurement information to the second device, or if the first request message is used to request the relative location information, the first device sends the relative location information to the second device.

Therefore, in this application, the first device may obtain, upon a request, relative location information between two terminal devices or measurement information that is between the two terminal devices and that is for determining the relative location information. Then, in a scenario in which relative location information between terminal devices is needed, the first device may obtain measurement information or the relative location information through an interface between the terminal devices, and may not need to obtain absolute location information of the terminal devices. This supports more application scenarios.

With reference to the first aspect, in some implementations of the first aspect, the first device is the first terminal device or the second terminal device, and when the first device sends the relative location information to the second device, the method further includes: The first device obtains the measurement information; and the first device determines the relative location information based on the measurement information; or the first device obtains the measurement information; the first device sends the measurement information to a location management network element; and the first device receives the relative location information from the location management network element.

Therefore, in this application, when the first terminal device or the second terminal device receives the first request message, the first terminal device may autonomously perform ranging to obtain the measurement information, and obtain the relative location information through calculation based on the measurement information; or may perform ranging to obtain the measurement information, and then send the measurement information to the location management network element, so that the location management network element calculates the relative location information.

With reference to the first aspect, in some implementations of the first aspect, before the first device sends the measurement information to the location management network element, the method further includes: The first device sends a second request message to an AMF network element, where the second request message is used to request to determine the relative location information. The first device receives a measurement request message from the location management network element, where the measurement request message is used to request the measurement information.

Therefore, in this application, when the first terminal device or the second terminal device receives the first request message, the first terminal device may send a request to the location management network element, to request the location management network element to initiate a measurement procedure, to improve communication system flexibility.

With reference to the first aspect, in some implementations of the first aspect, the first device is an AMF network element, and the method further includes: The first device sends a third request message to a location management network element based on the first request message, where the third request message is used to request the relative location information or the measurement information. The first device receives the relative location information or the measurement information that is from the location management network element in response to the third request message; or the first device sends a fourth request message to the first terminal device; and the first device receives the relative location information or the measurement information that is from the first terminal device in response to the fourth request message.

Therefore, in this application, when the AMF network element receives the first request message, the AMF network element may request the first terminal device to initiate a measurement procedure, or may request the location management network element to initiate a measurement procedure, to improve communication system flexibility.

With reference to the first aspect, in some implementations of the first aspect, before the first device sends the fourth request message to the first terminal device, the method further includes: The first device determines a discovery mode and/or a discovery role based on the first request message. The discovery mode is discovery through an interface between the first terminal device and the second terminal device, the discovery role indicates roles of the first terminal device and the second terminal device in the discovery mode, and the fourth request message carries the discovery mode and/or the discovery role.

Therefore, in this application, a core network element may further determine the discovery mode and the discovery role that are used by the first terminal device and the second terminal device to perform measurement, so that the first terminal device and the second terminal device may perform measurement based on the discovery mode and the discovery role.

With reference to the first aspect, in some implementations of the first aspect, the first request message includes trigger condition information and action information, the trigger condition information indicates that the first terminal device performs a first action when the relative location information meets a first condition, the action information indicates the first action, and the fourth request message includes the trigger condition information and the action information.

Therefore, in this application, the first terminal device may further perform the first action based on an indication of the trigger condition information and the action information, to support more application scenarios.

With reference to the first aspect, in some implementations of the first aspect, the first device is a GMLC network element, and the method further includes: The first device sends a fifth request message to an AMF network element based on the first request message, where the fifth request message is used to request the relative location information or the measurement information. The first device receives the relative location information or the measurement information that is from the AMF network element in response to the fifth request message.

Therefore, in this application, when the GMLC network element receives the first request message, the GMLC network element may send a request to the AMF network element, so that the AMF network element may request the first terminal device to initiate a measurement procedure or request the location management network element to initiate a measurement procedure, to improve system flexibility.

With reference to the first aspect, in some implementations of the first aspect, the first device determines, based on the first request message, that the first terminal device is an execution terminal device. The execution terminal device is a terminal device that communicates with a core network element in a process of obtaining the relative location information.

Therefore, in this application, the first device may further determine a specific terminal device in the first terminal device and the second terminal device serving as the terminal device that communicates with the core network element.

With reference to the first aspect, in some implementations of the first aspect, the first request message includes indication information, and the indication information indicates that the first terminal device is the execution terminal device.

With reference to the first aspect, in some implementations of the first aspect, the method further includes: The first device receives capability information from the first terminal device. The capability information indicates at least one of the following information: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

Therefore, in this application, the first device may further obtain the capability information of the first terminal device, to learn, based on the capability information, whether the first terminal device can perform a measurement procedure, to improve system reliability.

With reference to the first aspect, in some implementations of the first aspect, the first request message includes at least one of the following information: identification information of the first terminal device, identification information of the second terminal device, measurement requirement information, a measurement information type, measurement type information, the trigger condition information, and the action information. The measurement information type information indicates that the first request message is used to request to obtain the measurement information or the relative location information, the measurement type information indicates a type of the relative location information, the trigger condition information indicates that the first terminal device performs the first action when the relative location information meets the first condition, and the action information indicates the first action.

Therefore, in this application, the first device may obtain the measurement information or the relative location information based on information in the first request message, to improve system reliability.

With reference to the first aspect, in some implementations of the first aspect, the second request message includes at least one of the following information: the measurement requirement information, the measurement information type, and the measurement type information. The measurement information type information indicates that the first request message is used to request the measurement information or the relative location information, and the measurement type information indicates the type of the relative location information.

With reference to the first aspect, in some implementations of the first aspect, the measurement request message includes at least one of the following information: the measurement information type and the measurement type information. The measurement information type indicates that the measurement request message is used to request the measurement information, and the measurement type information indicates the type of the relative location information.

With reference to the first aspect, in some implementations of the first aspect, the third request message includes at least one of the following information: the identification information of the first terminal device, the identification information of the second terminal device, the measurement requirement information, the measurement information type, the measurement type information, the trigger condition information, and the action information. The measurement information type indicates that the first request message is used to request the measurement information or the relative location information, the measurement type information indicates the type of the relative location information, the trigger condition information indicates that the first terminal device performs the first action when the relative location information meets the first condition, and the action information indicates the first action.

With reference to the first aspect, in some implementations of the first aspect, the fourth request message includes at least one of the following information: PC5 measurement indication information, identification information of a third terminal device, the identification information of the second terminal device, the measurement information type, the measurement type information, the trigger condition information, the action information, and a discovery role of the first terminal device in the discovery mode. The PC5 measurement indication information indicates that the relative location information is measured through a PC5 interface, the measurement information type indicates that the fourth request message is used to request the measurement information or the relative location information, the measurement type information indicates the type of the relative location information, the trigger condition information indicates that the first terminal device performs the first action when the relative location information meets the first condition, and the action information indicates the first action.

According to a second aspect, a wireless communication method is provided. The method may be performed by a location management network element or a chip in the location management network element. The method includes: The location management network element sends a request message to a first terminal device. The request message is used to request to obtain measurement information or relative location information between the first terminal device and a second terminal device through an interface between the first terminal device and the second terminal device. The relative location information includes at least one of the following location information: relative positioning information, relative distance information, and relative angle information. The location management network element receives the measurement information or the relative location information that is from the first terminal device in response to the request message.

Therefore, in this application, the location management network element may request the first terminal device to perform measurement through an interface between terminal devices, to obtain needed relative location information or needed measurement information, so that absolute location information of the terminal devices may not need to be obtained, and more application scenarios can be supported.

With reference to the second aspect, in some implementations of the second aspect, when the location management network element receives the measurement information, the method further includes: The location management network element determines the relative location information based on the measurement information.

With reference to the second aspect, in some implementations of the second aspect, before the location management network element sends the request message to the first terminal device, the method further includes: The location management network element determines a discovery mode and/or a discovery role. The discovery mode is discovery through the interface between the first terminal device and the second terminal device, the discovery role indicates roles of the first terminal device and the second terminal device in the discovery mode, and the request message carries the discovery mode and/or the discovery role.

With reference to the second aspect, in some implementations of the second aspect, before the location management network element sends the request message to the first terminal device, the method further includes: The location management network element receives a location request message. The location request message is used to request the relative location information.

With reference to the second aspect, in some implementations of the second aspect, the location request message includes trigger condition information and action information, the trigger condition information indicates that the first terminal device performs a first action when the relative location information meets a first condition, the action information indicates the first action, and the request message includes the trigger condition information and the action information.

With reference to the second aspect, in some implementations of the second aspect, the method further includes: The location management network element receives capability information from the first terminal device: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

With reference to the second aspect, in some implementations of the second aspect, the request message includes at least one of the following information: ranging indication information, identification information of the second terminal device, a measurement information type, measurement type information, the trigger condition information, the action information, and a discovery role of the first terminal device in the discovery mode. The ranging indication information indicates that ranging is performed through the interface, the measurement information type indicates that the request message is used to request the measurement information or the relative location information, the measurement type information indicates a type of the relative location information, the trigger condition information indicates that the first terminal device performs the first action when the relative location information meets the first condition, and the action information indicates the first action.

According to a third aspect, a wireless communication method is provided. The method may be performed by a second device or a chip in the second device. The method includes: The second device sends a first request message to a first device. The first request message is used to request relative location information between a first terminal device and a second terminal device, or the first request message is used to request measurement information between the first terminal device and the second terminal device. The measurement information is used to determine the relative location information. The relative location information includes at least one of the following location information: relative positioning information, relative distance information, and relative angle information. The second device receives the measurement information or the relative location information that is from the first device in response to the first request message. When the second device receives the measurement information, the second device determines the relative location information based on the measurement information.

Therefore, in this application, the first device may obtain, upon a request, relative location information between two terminal devices or measurement information that is between the two terminal devices and that is for determining the relative location information. Then, in a scenario in which relative location information between terminal devices is needed, the first device may obtain measurement information or the relative information through an interface between the terminal devices, and may not need to obtain absolute location information of the terminal devices. This supports more application scenarios.

With reference to the third aspect, in some implementations of the third aspect, the first request message includes at least one of the following information: identification information of the first terminal device, identification information of the second terminal device, measurement requirement information, a measurement information type, measurement type information, trigger condition information, and action information. The measurement information type information indicates that the first request message is used to request to obtain the measurement information or the relative location information, the measurement type information indicates a type of the relative location information, the trigger condition information indicates that the first terminal device performs a first action when the relative location information meets a first condition, and the action information indicates the first action.

According to a fourth aspect, a wireless communication method is provided. The method may be performed by a first terminal device or a chip in the first terminal device. The method includes: The first terminal device obtains measurement information between the first terminal device and a second terminal device through an interface between the first terminal device and the second terminal device. The first terminal device obtains relative location information between the first terminal device and the second terminal device based on the measurement information.

Therefore, in this application, the first terminal device may perform a measurement procedure through an interface between terminal devices, to obtain needed relative location information or needed measurement information, so that absolute location information of the terminal devices may not need to be obtained, and more application scenarios can be supported.

With reference to the fourth aspect, in some implementations of the fourth aspect, that the first terminal device obtains relative location information includes: The first terminal device determines the relative location information based on the measurement information. Alternatively, the first terminal device sends the measurement information to an AMF network element; and the first terminal device receives the relative location information sent by the AMF network element. Alternatively, the first terminal device sends a location request message to an AMF network element, where the location request message is used to request to determine the relative location information.

With reference to the fourth aspect, in some implementations of the fourth aspect, before the first terminal device obtains the measurement information, the method further includes: The first terminal device receives a request message. The request message is used to request to obtain the measurement information or the relative location information through the interface.

With reference to the fourth aspect, in some implementations of the fourth aspect, the request message further includes trigger condition information and action information, the trigger condition information indicates that the first terminal device performs a first action when the relative location information meets a first condition, the action information indicates the first action, and the method further includes: The first terminal device performs the first action when the relative location information meets the first condition.

With reference to the fourth aspect, in some implementations of the fourth aspect, the method further includes: The first terminal device sends capability information. The capability information indicates at least one of the following information: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

With reference to the fourth aspect, in some implementations of the fourth aspect, the method further includes: The first terminal device receives a configuration message. The configuration message includes at least one of the following information: authorized measurement type information, an authorized measurement parameter, an authorized measurement role, an identifier of a user authorized to use the relative location information, an authorized discovery mode, an authorized discovery role, measurement mapping information, the trigger condition information, and the action information. The authorized measurement type information indicates that the first terminal device supports obtaining of the relative location information through an interface between the first terminal device and another terminal device, the authorized measurement role indicates a measurement role when the relative location information is obtained, the authorized discovery mode indicates that a mode of discovering through the interface or a mode of being discovered through the interface is supported, the authorized discovery role indicates that the first terminal device is at least one of a discoverer terminal device, a discoveree terminal device, an announcing terminal device, or a monitoring terminal device, the measurement mapping information indicates a mapping relationship between a reference message for obtaining the relative location information and a destination layer 2 identifier, the trigger condition information indicates that the first terminal device performs the first action when the relative location information meets the first condition, and the action information indicates the first action.

According to a fifth aspect, a wireless communication method is provided. The method may be performed by an access network device or a chip in the access network device. The method includes: The access network device receives authorization indication information from an AMF network element. The authorization indication information indicates that a first terminal device is authorized to obtain measurement information or relative location information through an interface between the first terminal device and a second terminal device. The measurement information is used to determine the relative location information. The relative location information includes at least one of the following location information: relative positioning information, relative distance information, and relative angle information. The access network device allocates, based on the authorization indication information, a resource for measurement to the first terminal device.

Therefore, in this application, the access network device learns, based on the authorization indication information, that the first terminal device supports obtaining of the measurement information or the relative location information through the interface between the first terminal device and the second terminal device, and may allocate the resource for the measurement to the first terminal device, so that the first terminal device may perform a measurement procedure through an interface between terminal devices, to obtain needed relative location information or needed measurement information, so that absolute location information of the terminal devices may not need to be obtained, and more application scenarios can be supported.

With reference to the fifth aspect, in some implementations of the fifth aspect, the method further includes: The access network device receives at least one of the following information from the AMF network element: an authorized measurement parameter and an authorized measurement role. The authorized measurement role indicates a measurement role when the relative location information is obtained, and the authorized measurement parameter includes at least one of the following parameters: a measurement periodicity, precision, latency, and bandwidth.

According to a sixth aspect, a wireless communication apparatus is provided. The apparatus includes a processing unit and a transceiver unit. The transceiver unit is configured to receive a first request message from a second device. The first request message is used to request relative location information between a first terminal device and a second terminal device, or the first request message is used to request measurement information between the first terminal device and the second terminal device. The measurement information is used to determine the relative location information. The relative location information includes at least one of the following location information: relative positioning information, relative distance information, and relative angle information. The processing unit is configured to generate the relative location information or the measurement information based on the first request message. The transceiver unit is further configured to send the relative location information or the measurement information to the second device in response to the first request message.

Therefore, in this application, a first device may obtain, upon a request, relative location information between two terminal devices or measurement information that is between the two terminal devices and that is for determining the relative location information. Then, in a scenario in which relative location information between terminal devices is needed, the first device may obtain measurement information or the relative information through an interface between the terminal devices, and may not need to obtain absolute location information of the terminal devices. This supports more application scenarios.

With reference to the sixth aspect, in some implementations of the sixth aspect, the apparatus is the first terminal device or the second terminal device. When the transceiver unit is configured to send the relative location information to the second device, the processing unit is further configured to obtain the measurement information; and the processing unit is further configured to determine the relative location information based on the measurement information; or the processing unit is further configured to obtain the measurement information; the transceiver unit is further configured to send the measurement information to a location management network element; and the transceiver unit is further configured to receive the relative location information from the location management network element.

With reference to the sixth aspect, in some implementations of the sixth aspect, before the transceiver unit is configured to send the measurement information to the location management network element, the transceiver unit is further configured to send a second request message to an AMF network element, where the second request message is used to request to determine the relative location information. The transceiver unit is further configured to receive a measurement request message from the location management network element, where the measurement request message is used to request the measurement information.

With reference to the sixth aspect, in some implementations of the sixth aspect, the apparatus is an AMF network element. The transceiver unit is further configured to send a third request message to a location management network element based on the first request message, where the third request message is used to request the relative location information or the measurement information. The transceiver unit is further configured to receive the relative location information or the measurement information that is from the location management network element in response to the third request message. Alternatively, the transceiver unit is further configured to send a fourth request message to the first terminal device; and the transceiver unit is further configured to receive the relative location information or the measurement information that is from the first terminal device in response to the fourth request message.

With reference to the sixth aspect, in some implementations of the sixth aspect, before the transceiver unit is further configured to send the fourth request message to the first terminal device, the processing unit is further configured to determine a discovery mode and/or a discovery role based on the first request message. The discovery mode is discovery through an interface between the first terminal device and the second terminal device, the discovery role indicates roles of the first terminal device and the second terminal device in the discovery mode, and the fourth request message carries the discovery mode and/or the discovery role.

With reference to the sixth aspect, in some implementations of the sixth aspect, the first request message includes trigger condition information and action information, the trigger condition information indicates that the first terminal device performs a first action when the relative location information meets a first condition, the action information indicates the first action, and the fourth request message includes the trigger condition information and the action information.

With reference to the sixth aspect, in some implementations of the sixth aspect, the apparatus is a GMLC network element. The processing unit is further configured to send a fifth request message to an AMF network element based on the first request message, where the fifth request message is used to request the relative location information or the measurement information. The transceiver unit is further configured to receive the relative location information or the measurement information that is from the AMF network element in response to the fifth request message.

With reference to the sixth aspect, in some implementations of the sixth aspect, the first request message includes indication information, and the indication information indicates that the first terminal device is an execution terminal device. With reference to the sixth aspect, in some implementations of the sixth aspect, the transceiver unit is further configured to receive capability information from the first terminal device. The capability information indicates at least one of the following information: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

With reference to the sixth aspect, in some implementations of the sixth aspect, the first request message includes at least one of the following information: identification information of the first terminal device, identification information of the second terminal device, measurement requirement information, a measurement information type, measurement type information, the trigger condition information, and the action information. The measurement information type information indicates that the first request message is used to request to obtain the measurement information or the relative location information, the measurement type information indicates a type of the relative location information, the trigger condition information indicates that the first terminal device performs the first action when the relative location information meets the first condition, and the action information indicates the first action.

With reference to the sixth aspect, in some implementations of the sixth aspect, the second request message includes at least one of the following information: the measurement requirement information, the measurement information type, and the measurement type information. The measurement information type information indicates that the first request message is used to request the measurement information or the relative location information, and the measurement type information indicates the type of the relative location information.

With reference to the sixth aspect, in some implementations of the sixth aspect, the measurement request message includes at least one of the following information: the measurement information type and the measurement type information. The measurement information type indicates that the measurement request message is used to request the measurement information, and the measurement type information indicates the type of the relative location information.

With reference to the sixth aspect, in some implementations of the sixth aspect, the third request message includes at least one of the following information: the identification information of the first terminal device, the identification information of the second terminal device, the measurement requirement information, the measurement information type, the measurement type information, the trigger condition information, and the action information. The measurement information type indicates that the first request message is used to request the measurement information or the relative location information, the measurement type information indicates the type of the relative location information, the trigger condition information indicates that the first terminal device performs the first action when the relative location information meets the first condition, and the action information indicates the first action.

With reference to the sixth aspect, in some implementations of the sixth aspect, the fourth request message includes at least one of the following information: PC5 measurement indication information, identification information of a third terminal device, the identification information of the second terminal device, the measurement information type, the measurement type information, the trigger condition information, the action information, and a discovery role of the first terminal device in the discovery mode. The PC5 measurement indication information indicates that the relative location information is measured through a PC5 interface, the measurement information type indicates that the fourth request message is used to request the measurement information or the relative location information, the measurement type information indicates the type of the relative location information, the trigger condition information indicates that the first terminal device performs the first action when the relative location information meets the first condition, and the action information indicates the first action.

According to a seventh aspect, a wireless communication apparatus is provided. The apparatus includes a transceiver unit and a processing unit. The processing unit is configured to generate a request message. The transceiver unit is configured to send the request message to a first terminal device. The request message is used to request to obtain measurement information or relative location information between the first terminal device and a second terminal device through an interface between the first terminal device and the second terminal device. The relative location information includes at least one of the following location information: relative positioning information, relative distance information, and relative angle information. The transceiver unit is further configured to receive the measurement information or the relative location information that is from the first terminal device in response to the request message.

Therefore, in this application, a location management network element may request the first terminal device to perform measurement through an interface between terminal devices, to obtain needed relative location information or needed measurement information, so that absolute location information of the terminal devices may not need to be obtained, and more application scenarios can be supported.

With reference to the seventh aspect, in some implementations of the seventh aspect, when the transceiver unit is further configured to receive the measurement information, the processing unit is further configured to determine the relative location information based on the measurement information.

With reference to the seventh aspect, in some implementations of the seventh aspect, before the transceiver unit is further configured to send the request message to the first terminal device, the processing unit is further configured to determine a discovery mode and/or a discovery role. The discovery mode is discovery through the interface between the first terminal device and the second terminal device, the discovery role indicates roles of the first terminal device and the second terminal device in the discovery mode, and the request message carries the discovery mode and/or the discovery role.

With reference to the seventh aspect, in some implementations of the seventh aspect, before the transceiver unit is further configured to send the request message to the first terminal device, the transceiver unit is further configured to receive a location request message. The location request message is used to request the relative location information.

With reference to the seventh aspect, in some implementations of the seventh aspect, the location request message includes trigger condition information and action information, the trigger condition information indicates that the first terminal device performs a first action when the relative location information meets a first condition, the action information indicates the first action, and the request message includes the trigger condition information and the action information.

With reference to the seventh aspect, in some implementations of the seventh aspect, the transceiver unit is further configured to receive capability information from the first terminal device: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

With reference to the seventh aspect, in some implementations of the seventh aspect, the request message includes at least one of the following information: ranging indication information, identification information of the second terminal device, a measurement information type, measurement type information, the trigger condition information, the action information, and a discovery role of the first terminal device in the discovery mode. The ranging indication information indicates that ranging is performed through the interface, the measurement information type indicates that the request message is used to request the measurement information or the relative location information, the measurement type information indicates a type of the relative location information, the trigger condition information indicates that the first terminal device performs the first action when the relative location information meets the first condition, and the action information indicates the first action.

According to an eighth aspect, a wireless communication apparatus is provided. The apparatus includes a transceiver unit and a processing unit. The transceiver unit is configured to send a first request message to a first device. The first request message is used to request relative location information between a first terminal device and a second terminal device, or the first request message is used to request measurement information between the first terminal device and the second terminal device. The measurement information is used to determine the relative location information. The relative location information includes at least one of the following location information: relative positioning information, relative distance information, and relative angle information. The transceiver unit is further configured to receive the measurement information or the relative location information that is from the first device in response to the first request message. When the transceiver unit is further configured to receive the measurement information, the processing unit is configured to determine the relative location information based on the measurement information.

Therefore, in this application, the first device may obtain, upon a request, relative location information between two terminal devices or measurement information that is between the two terminal devices and that is for determining the relative location information. Then, in a scenario in which relative location information between terminal devices is needed, the first device may obtain measurement information or the relative information through an interface between the terminal devices, and may not need to obtain absolute location information of the terminal devices. This supports more application scenarios.

With reference to the eighth aspect, in some implementations of the eighth aspect, the first request message includes at least one of the following information: identification information of the first terminal device, identification information of the second terminal device, measurement requirement information, a measurement information type, measurement type information, trigger condition information, and action information. The measurement information type information indicates that the first request message is used to request to obtain the measurement information or the relative location information, the measurement type information indicates a type of the relative location information, the trigger condition information indicates that the first terminal device performs a first action when the relative location information meets a first condition, and the action information indicates the first action.

According to a ninth aspect, a wireless communication apparatus is provided. The apparatus includes a processing unit. The processing unit is configured to obtain measurement information between a first terminal device and a second terminal device through an interface between the first terminal device and the second terminal device. The processing unit is further configured to obtain relative location information between the first terminal device and the second terminal device based on the measurement information.

Therefore, in this application, the first terminal device may perform a measurement procedure through an interface between terminal devices, to obtain needed relative location information or needed measurement information, so that absolute location information of the terminal devices may not need to be obtained, and more application scenarios can be supported.

With reference to the ninth aspect, in some implementations of the ninth aspect, the apparatus further includes a transceiver unit. That the processing unit is configured to obtain relative location information includes: The processing unit is specifically configured to determine the relative location information based on the measurement information. Alternatively, the transceiver unit is configured to send the measurement information to an AMF network element. The transceiver unit is further configured to receive the relative location information sent by the AMF network element. Alternatively, the transceiver unit is further configured to send a location request message to the AMF network element, where the location request message is used to request to determine the relative location information.

With reference to the ninth aspect, in some implementations of the ninth aspect, before the processing unit is configured to obtain the measurement information, the transceiver unit is further configured to receive a request message. The request message is used to request to obtain the measurement information or the relative location information through the interface.

With reference to the ninth aspect, in some implementations of the ninth aspect, the request message further includes trigger condition information and action information. The trigger condition information indicates that the first terminal device performs a first action when the relative location information meets a first condition, and the action information indicates the first action. The processing unit is further configured to perform the first action when the relative location information meets the first condition.

With reference to the ninth aspect, in some implementations of the ninth aspect, the transceiver unit is further configured to send capability information. The capability information indicates at least one of the following information: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

With reference to the ninth aspect, in some implementations of the ninth aspect, the transceiver unit is further configured to receive a configuration message. The configuration message includes at least one of the following information: authorized measurement type information, an authorized measurement parameter, an authorized measurement role, an identifier of a user authorized to use the relative location information, an authorized discovery mode, an authorized discovery role, measurement mapping information, the trigger condition information, and the action information. The authorized measurement type information indicates that the first terminal device supports obtaining of the relative location information through an interface between the first terminal device and another terminal device, the authorized measurement role indicates a measurement role when the relative location information is obtained, the authorized discovery mode indicates that a mode of discovering through the interface or a mode of being discovered through the interface is supported, the authorized discovery role indicates that the first terminal device is a discoverer terminal device, a discoveree terminal device, an announcing terminal device, or a monitoring terminal device, the measurement mapping information indicates a mapping relationship between a reference message for obtaining the relative location information and a destination layer 2 identifier, the trigger condition information indicates that the first terminal device performs the first action when the relative location information meets the first condition, and the action information indicates the first action.

According to a tenth aspect, a wireless communication apparatus is provided. The apparatus includes a transceiver unit and a processing unit. The transceiver unit is configured to receive authorization indication information from an AMF network element. The authorization indication information indicates that a first terminal device is authorized to obtain measurement information or relative location information through an interface between the first terminal device and a second terminal device. The measurement information is used to determine the relative location information. The relative location information includes at least one of the following location information: relative positioning information, relative distance information, and relative angle information. The processing unit is configured to allocate, based on the authorization indication information, a resource for ranging to the first terminal device.

Therefore, in this application, an access network device learns, based on the authorization indication information, that the first terminal device supports obtaining of the measurement information or the relative location information through the interface between the first terminal device and the second terminal device, and may allocate the resource for the measurement to the first terminal device, so that the first terminal device may perform a measurement procedure through an interface between terminal devices, to obtain needed relative location information or needed measurement information, so that absolute location information of the terminal devices may not need to be obtained, and more application scenarios can be supported.

With reference to the tenth aspect, in some implementations of the tenth aspect, the transceiver unit is further configured to receive at least one of the following information from the AMF network element: an authorized measurement parameter and an authorized measurement role. The authorized measurement role indicates a measurement role when the relative location information is obtained, and the authorized measurement parameter includes at least one of the following parameters: a measurement periodicity, precision, latency, and bandwidth.

According to an eleventh aspect, a wireless communication apparatus is provided. The apparatus is configured to perform the wireless communication method in any one of the possible implementations of the first aspect. Specifically, the apparatus may include a unit and/or a module, for example, a processing unit and/or a transceiver unit, configured to perform the wireless communication method provided in any one of the first aspect or the foregoing implementations of the first aspect.

In an implementation, the apparatus is a first device. When the apparatus is the first device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit configured in a first device. When the apparatus is the chip, the chip system, or the circuit configured in the first device, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

For example, the first device may be a first terminal device, a second terminal device, a third terminal device, a mobility management network element, or a GMLC network element.

According to a twelfth aspect, a wireless communication apparatus is provided. The apparatus is configured to perform the wireless communication method in any one of the possible implementations of the second aspect. Specifically, the apparatus may include a unit and/or a module, for example, a processing unit and/or a transceiver unit, configured to perform the wireless communication method provided in any one of the second aspect or the foregoing implementations of the second aspect.

In an implementation, the apparatus is a location management network element. When the apparatus is the location management network element, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit configured in a location management network element. When the apparatus is the chip, the chip system, or the circuit configured in the location management network element, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a thirteenth aspect, a wireless communication apparatus is provided. The apparatus is configured to perform the wireless communication method in any one of the possible implementations of the third aspect. Specifically, the apparatus may include a unit and/or a module, for example, a processing unit and/or a transceiver unit, configured to perform the wireless communication method provided in any one of the third aspect or the foregoing implementations of the third aspect.

In an implementation, the apparatus is a second device. When the apparatus is the second device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit configured in a second device. When the apparatus is the chip, the chip system, or the circuit configured in the second device, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

For example, the second device may be a first terminal device, a second terminal device, a third terminal device, or an AF network element.

According to a fourteenth aspect, a wireless communication apparatus is provided. The apparatus is configured to perform the wireless communication method in any one of the possible implementations of the fourth aspect. Specifically, the apparatus may include a unit and/or a module, for example, a processing unit and/or a transceiver unit, configured to perform the wireless communication method provided in any one of the fourth aspect or the foregoing implementations of the fourth aspect.

In an implementation, the apparatus is a first terminal device. When the apparatus is the first terminal device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit configured in a first terminal device. When the apparatus is the chip, the chip system, or the circuit configured in the first terminal device, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifteenth aspect, a wireless communication apparatus is provided. The apparatus is configured to perform the wireless communication method in any one of the possible implementations of the fifth aspect. Specifically, the apparatus may include a unit and/or a module, for example, a processing unit and/or a transceiver unit, configured to perform the wireless communication method provided in any one of the fifth aspect or the foregoing implementations of the fifth aspect.

In an implementation, the apparatus is an access network device. When the apparatus is the access network device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit configured in an access network device. When the apparatus is the chip, the chip system, or the circuit configured in the access network device, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixteenth aspect, a wireless communication apparatus is provided. The apparatus includes: a memory, configured to store a program; and at least one processor, configured to execute a computer program or instructions stored in the memory, to implement the wireless communication method in any one of the possible implementations of the first aspect, the wireless communication method in any one of the possible implementations of the second aspect, the wireless communication method in any one of the possible implementations of the third aspect, the wireless communication method in any one of the possible implementations of the fourth aspect, or the wireless communication method in any one of the possible implementations of the fifth aspect.

In an implementation, the apparatus is a first device. In another implementation, the apparatus is a chip, a chip system, or a circuit configured in a first device.

In an implementation, the apparatus is a location management network element. In another implementation, the apparatus is a chip, a chip system, or a circuit configured in a location management network element.

In an implementation, the apparatus is a second device. In another implementation, the apparatus is a chip, a chip system, or a circuit configured in a second device.

In an implementation, the apparatus is a first terminal device. In another implementation, the apparatus is a chip, a chip system, or a circuit configured in a first terminal device.

In an implementation, the apparatus is an access network device. In another implementation, the apparatus is a chip, a chip system, or a circuit configured in an access network device.

According to a seventeenth aspect, a processor is provided, and is configured to perform the wireless communication method in any one of the possible implementations of the first aspect to the fifth aspect.

Unless otherwise specified, or if operations such as sending and obtaining/receiving related to the processor do not conflict with actual functions or internal logic in related descriptions, the operations may be understood as operations such as outputting, receiving, and inputting of the processor, or may be understood as sending and receiving operations performed by a radio frequency circuit and an antenna. This is not limited in this application.

According to an eighteenth aspect, a computer program product is provided. The computer program product includes a computer program (which may also be referred to as code or instructions). When the computer program is run, a computer is enabled to perform the wireless communication method in any one of the possible implementations of the first aspect to the fifth aspect.

According to a nineteenth aspect, a computer-readable storage medium is provided. The computer-readable storage medium stores a computer program (which may also be referred to as code or instructions). When the computer program is run on a computer, the computer is enabled to perform the wireless communication method in any one of the possible implementations of the first aspect to the fifth aspect.

According to a twentieth aspect, a chip system is provided, and includes a processor, configured to invoke a computer program from a memory and run the computer program, to enable a device on which the chip system is installed to perform the wireless communication method in any one of the possible implementations of the first aspect to the fifth aspect.

Optionally, in an implementation, a chip further includes a memory. The memory stores a computer program or instructions. The processor is configured to execute the computer program or the instructions stored in the memory. When the computer program or the instructions are executed, the processor is configured to perform the wireless communication method in any one of the possible implementations of the first aspect to the ninth aspect.

According to a twenty-first aspect, a communication system is provided, and includes the apparatus in any one of the possible implementations of the sixth aspect to the tenth aspect.

### BRIEF DESCRIPTION OF DRAWINGS

FIG. 1 is a diagram of an application scenario to which an embodiment of this application is applicable;
FIG. 2 is a schematic flowchart of a wireless communication method 200 according to an embodiment of this application;
FIG. 3 is a schematic flowchart of a communication method when a first device is a first terminal device, and a second device is a third terminal device;
FIG. 4 is a schematic flowchart of another communication method when a first device is a first terminal device, and a second device is a third terminal device;
FIG. 5 is a schematic flowchart of a method in which a first terminal device obtains relative location information;
FIG. 6 is a schematic flowchart of a communication method when a first device is an AMF network element, and a second device is a third terminal device;
FIG. 7 is a schematic flowchart of another communication method when a first device is an AMF network element, and a second device is a third terminal device;
FIG. 8 is a schematic flowchart of a communication method when a first device is an AMF network element, and a second device is a first terminal device;
FIG. 9A and FIG. 9B are a schematic flowchart of a communication method when a first device is a GMLC network element, and a second device is an AF network element;
FIG. 10 is a schematic flowchart of another wireless communication method according to an embodiment of this application;
FIG. 11 is a schematic flowchart of a method for configuring a first terminal device; and
FIG. 12 and FIG. 13 are possible wireless communication apparatuses according to embodiments of this application.

### DESCRIPTION OF EMBODIMENTS

The following describes technical solutions in embodiments of this application with reference to accompanying drawings.

For ease of understanding of embodiments of this application, the following descriptions are first provided before embodiments of this application are described.

First, in embodiments of this application, an "indication" may include a direct indication and an indirect indication, or may include an explicit indication and an implicit indication. Information indicated by a message (for example, a first request message described below) is referred to as to-be-indicated information. In this case, in a specific implementation process, the to-be-indicated information may be indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent.

Second, the terms "first", "second", and various numbers in the following embodiments are merely for differentiation for ease of description, but are not intended to limit the scope of embodiments of this application. For example, the terms and the numbers in the following embodiments are for differentiating between different reference information.

Third, in the following embodiments, "pre-configuration" may be implemented by prestoring corresponding code or a table in a device (for example, a terminal device), or in another manner that may indicate related information. A specific implementation of the "pre-configuration" is not limited in this application.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The technical solutions provided in this application may be further applied to a future communication system, for example, a 6th generation mobile communication system. This is not limited in this application.

Usually, a conventional communication system supports a limited quantity of connections, and the connections are easy to implement. However, as communication technologies develop, a mobile communication system not only supports conventional communication, but also supports, for example, device-to-device (device-to-device, D2D) communication, machine-to-machine (machine-to-machine, M2M) communication, machine type communication (machine type communication, MTC), and vehicle-to-everything (vehicle-to-everything, V2X) communication (which may also be referred to as connected-vehicle-to-everything communication) such as vehicle-to-vehicle (vehicle-to-vehicle, V2V) communication (which may also be referred to as vehicle-to-vehicle communication), vehicle-to-infrastructure (vehicle-to-infrastructure, V2I) communication (which may also be referred to as vehicle-to-infrastructure communication), vehicle-to-pedestrian (vehicle-to-pedestrian, V2P) communication (which may also be referred to as vehicle-to-person communication), and vehicle-to-network (vehicle-to-network, V2N) communication (which may also be referred to as vehicle-to-network communication).

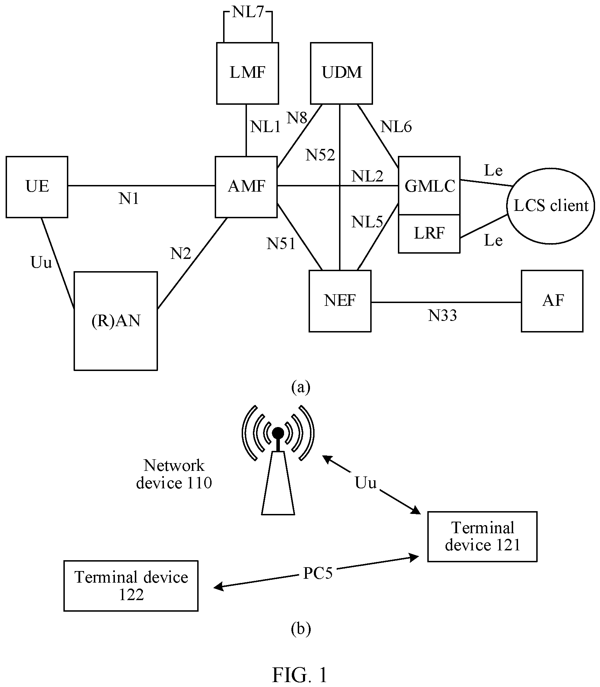

FIG. 1 is a diagram of an architecture of a communication system applicable to an embodiment of this application.

For example, as shown in (a) in FIG. 1, the architecture is, for example, a 5th generation system (5th generation system, 5GS). The 5GS includes a terminal device, a (radio) access network ((radio) access network, (R)AN) device, a mobility management network element, a location management network element, a data management (data management) network element, a gateway mobile location center, a user plane positioning center (supl positioning center), a user plane location center, an external client, a user plane network element, and some devices that are not shown in (a) in FIG. 1, for example, a network repository function (network function repository function, NRF) device. The foregoing devices in the 5GS may also be referred to as 5G core network devices.

The following briefly describes the devices shown in (a) in FIG. 1.
1. Terminal device: The terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device having a wireless connection function or a vehicle-mounted device. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile communication network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that are dedicated to only one type of application function and need to be used together with other devices such as smartphones, such as various smart bands or smart jewelry for monitoring physical signs.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for interconnection between a person and a machine or between things.

2. (R)AN: The (R)AN provides a network access function for a terminal device and can use transmission tunnels of different quality based on a user level, a service requirement, and the like. The access network may be an access network using different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements the network access function based on a wireless communication technology may be referred to as a radio access network (radio access network, RAN). The radio access network can manage a radio resource, provide an access service for a terminal, and further complete forwarding of a control signal and user data between the terminal and a core network.

For example, the access network device includes but is not limited to: a next-generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmitting and receiving point, TRP), a transmitting point (transmitting point, TP), and a mobile switching center. Alternatively, the access network device may be a radio controller in a cloud radio access network (cloud radio access network, CRAN) scenario. Alternatively, the access network device may be a relay station, an access point, a vehicle-mounted device, a wearable device, a network device in a future 5G network, a network device in a future evolved PLMN network, or the like. A specific technology and a specific device form that are used by the radio access network device are not limited in embodiments of this application.

3. Mobility management network element: The mobility management network element is mainly used for mobility management, access management, and the like, for example, user location update, user registration with a network, and user handover. For example, the mobility management network element may receive non-access stratum (non-access stratum, NAS) signaling (including mobility management (mobility management, MM) signaling and session management (session management, SM) signaling) of a terminal device and related signaling (for example, N2 signaling at a base station granularity exchanged between an access network device and the mobility management network element) of the access network device, to complete a user registration procedure, SM signaling forwarding, and the mobility management. The mobility management network element may be further configured to implement a function other than session management in a mobility management entity (mobility management entity, MME), for example, a lawful interception function or an access authorization (or authentication) function.

In a 5G communication system, the mobility management network element may be an access and mobility management function (access and mobility management function, AMF) network element. In a future communication system such as a 6th generation (6th generation, 6G) communication system, the mobility management network element may still be the AMF network element, or may have another name. This is not limited in this application.

4. Location management network element: The location management network element is responsible for a location-related information service of a terminal device, including: providing assistance information for the terminal device to perform location measurement, or processing location measurement information reported by the terminal device or a base station and calculating final coordinates, a location movement speed, and the like.

In a 5G communication system, the location management network element may be an LMF network element. In a future communication system, such as a 6G communication system, the mobility management network element may still be the LMF network element, or may have another name. This is not limited in this application.

5. Data management network element: The data management network element is configured to store user data, such as subscription information and authentication/authorization information.

In a 5G communication system, the data management network element may be a unified data management (unified data management, UDM) network element. In a future communication system, such as a 6G communication system, the unified data management may still be the UDM network element, or may have another name. This is not limited in this application.

6. Gateway mobile location center: The gateway mobile location center is responsible for interaction between an internal 5GC and an external LCS client. Alternatively, the GMCL may be a device that transfers location information.

In a 5G communication system, the gateway mobile location center may be a gateway mobile location center (gateway mobile location center, GMLC) network element. In a future communication system, such as a 6G communication system, the unified data management may still be the GMLC network element, or may have another name. This is not limited in this application.

7. Application function: The application function (application function, AF) is configured to: perform application-affected data routing, wirelessly access a network exposure function network element, interact with a policy framework for policy control, and the like.

In a future communication system, an application network element may still be the AF network element, or may have another name. This is not limited in this application.

8. Network capability exposure network element (network exposure function, NEF): The network capability exposure network element is configured to connect another network element inside a core network to an application server outside the core network for interaction, and may provide information about a network for the application server, or may provide information about the application server for a core network element.

In a 5G communication system, the network capability exposure network element may be a network capability exposure function network element. In a future communication system, the network capability exposure network element may still be the NEF network element, or may have another name. This is not limited in this application.

9. External client: The external client is configured to obtain location information of one or more UEs from a 3GPP network.

In a 5G communication system, the external client may be a location service (location service, LCS) client (client) network element. In a future communication system, an application network element may still be the LCS client network element, or may have another name. This is not limited in this application.

10. User plane network element: The user plane network element is used for packet routing and forwarding, handling of quality of service (quality of service, QoS) of user plane data, and the like.

In a 5G communication system, the user plane network element may be a user plane function (user plane function, UPF) network element. In a future communication system, the user plane network element may still be the UPF network element, or may have another name. This is not limited in this application.

It may be understood that the foregoing network elements or functions may be network elements in a hardware device, may be software functions running on dedicated hardware, or may be virtualized functions instantiated on a platform (for example, a cloud platform). In a possible implementation method, the foregoing network elements or functions may be implemented by one device, may be jointly implemented by a plurality of devices, or may be implemented by one functional module in one device. This is not specifically limited in embodiments of this application.

In the architecture shown in (a) in FIG. 1, the devices may communicate with each other through interfaces shown in the figure. As shown in (a) in FIG. 1, a Uu interface is a communication interface between the terminal device and the (R)AN, and is configured to communicate between the terminal device and the (R)AN, and the like. An N2 interface is a communication interface between the access network device and the mobility management network element, and is configured to communicate between the access network device and the mobility management network element, and the like. An NL1 interface is a communication interface between the mobility management network element and the location management network element, and is configured to send a location positioning request message and a response message, and the like. In addition, a relationship between another interface and the devices is shown in FIG. 1. For brevity, details are not described herein.

In (a) in FIG. 1, Uu, N1, N2, N52, NL1, NL2, NL5, NL6, N33, Le, and the like are interface sequence numbers. For meanings of these interface sequence numbers, refer to meanings defined in the 3rd generation partnership project (3rd generation partnership project, 3GPP) standard protocol and the open mobile alliance (open mobile alliance, OMA) organization standard protocol. This is not limited herein. For example, (b) in FIG. 1 is a diagram of a scenario of an inter-device communication mode. In the scenario shown in (b) in FIG. 1, there are mainly two communication interfaces: a communication interface (the Uu interface) between a terminal device 121 and a network device 110 (for example, the core network device in FIG. 1) and a communication interface (a PC5 interface) between the terminal device 121 and a terminal device 122. The Uu interface is used for communication between the user equipment and the base station or a roadside unit, and the PC5 interface is used for sidelink communication between terminals. On the Uu interface, a link on which the terminal sends data to the base station is referred to as an uplink (uplink), and a link on which the terminal receives data sent by the base station is referred to as a downlink (downlink). A communication interface between the terminals is referred to as the PC5 interface. A link, on the PC5 interface, for data transmission between the terminals is referred to as a sidelink (sidelink) or a direct communication link. The sidelink is generally used in a scenario in which direct communication can be performed between devices, such as a device-to-device (device-to-device, D2D) scenario. In this scenario, the data transmission between the devices does not need to pass through the base station. Vehicle-to-everything (vehicle-to-everything, V2X) communication may be considered as a special case of D2D communication.

On the Uu interface, data transmission and radio resource control (radio resource control, RRC) signaling transmission are performed between the terminal and the base station via radio bearers. A radio bearer for the data transmission is referred to as a data radio bearer (data radio bearer, DRB), and a bearer for the RRC signaling transmission is referred to as a signaling radio bearer (signaling radio bearer, SRB). One radio bearer includes a packet data convergence protocol (packet data convergence protocol, PDCP) entity and a radio link control (radio link control, RLC) bearer. One RLC bearer includes one RLC entity and a corresponding logical channel (Logical Channel, LCH). A configuration of the radio bearer is configurations of the PDCP entity, the RLC entity, and the logical channel of the radio bearer. The configuration of the radio bearer needs to ensure a quality of service (quality of service, QoS) requirement of a service transmitted via the radio bearer. On the Uu interface, the configuration of the radio bearer is configured by a network device for the terminal.

On the PC5 interface, data transmission and RRC signaling transmission also need to be performed between terminals via radio bearers. The radio bearers on the PC5 interface may be referred to as sidelink radio bearers (sidelink radio bearers, SL RBs). In a long term evolution (long term evolution, LTE) V2X system, radio bearers on the PC5 interface are respectively established by a transmitter terminal and a receiver terminal, and configurations of the radio bearers are predefined in a standard or are determined by the transmitter terminal and the receiver terminal.

It should be noted that names of the devices and communication interfaces between the devices in FIG. 1 are briefly described by using an example specified in a current protocol. However, it is not limited that embodiments of this application can be applied only to a currently known communication system. Therefore, standard names used when the current protocol is used as an example for description are all functional descriptions. A specific name of a device, an interface, signaling, or the like is not limited in this application, and only represents a function of the device, the interface, or the signaling, and may be correspondingly extended to another system, for example, a 2G, 3G, 4G, 5G, or future communication system.

The architecture that can be applied to embodiments of this application shown in FIG. 1 is merely an example for description, and an architecture applicable to embodiments of this application is not limited thereto. Any architecture that can implement functions of the foregoing devices is applicable to embodiments of this application.

It should be further understood that the foregoing names are defined merely for distinguishing between different functions, and should not constitute any limitation on this application. This application does not exclude a possibility that another name is used in the 5G network and another future network. For example, in a 6G network, a part or all of the foregoing devices may still use terms in 5G, or may use other names. A name of an interface between the devices in FIG. 1 is merely an example. During specific implementation, the name of the interface may be another name. This is not specifically limited in this application. In addition, names of messages (or signaling) transmitted between the foregoing devices are merely examples, and do not constitute any limitation on functions of the messages.

In the following embodiments, an example in which an interface between terminal devices is a PC5 interface is used. Unless otherwise specified, use of ranging through the PC5 interface, measurement through the PC5 interface, ranging performed through the PC5 interface, obtaining of measurement information or relative location information through the PC5 interface, and obtaining of the measurement information or the relative location information by using ranging through the PC5 interface may represent similar meanings.

Currently, a location management network element in a core network can provide absolute location information of a terminal device. Embodiments of this application provide a wireless communication method and an apparatus, to obtain relative location information between devices, and further support more application scenarios. The following first describes the wireless communication method provided in embodiments of this application.

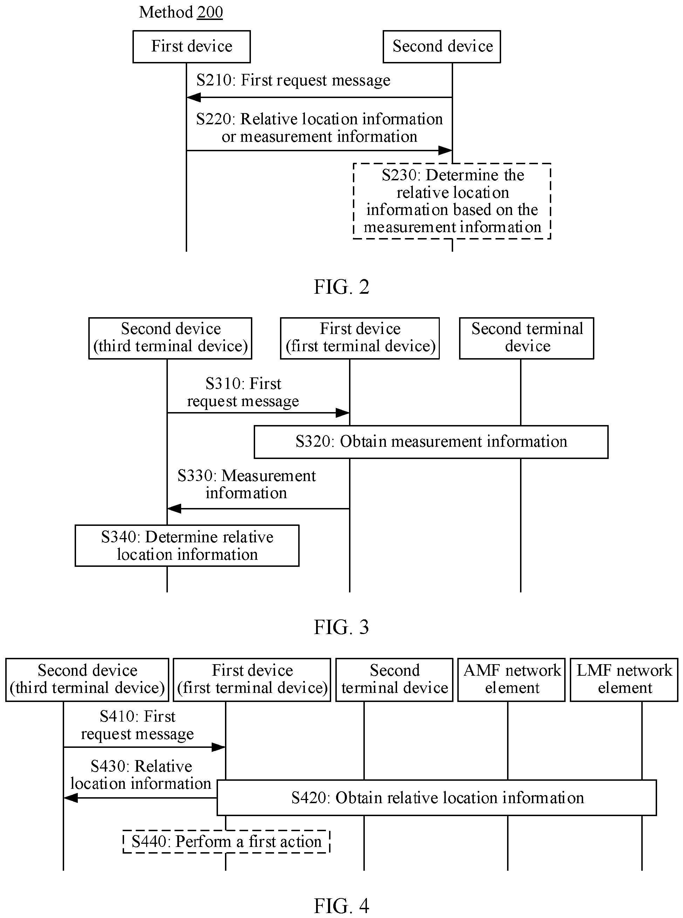

FIG. 2 is a schematic flowchart of a wireless communication method according to an embodiment of this application.

S210: A second device sends a first request message to a first device, and correspondingly, the first device receives the first request message from the second device.

The first request message is used to request relative location information between a first terminal device and a second terminal device.

The relative location information may include at least one of the following: relative positioning, a relative distance, and a relative angle.

Alternatively, the first request message is used to request measurement information between the first terminal device and the second terminal device, and the measurement information is used to determine the relative location information.

The measurement information may be related to a measurement manner. For example, the measurement manner is a ranging (ranging) manner or a sidelink ranging (sidelink ranging) manner. Positioning is performed between the first terminal device and the second terminal device through an interface (for example, a PC5 interface) between the first terminal device and the second terminal device. In this case, the measurement information may include: measuring a parameter related to a signal of the interface, for example, signal transmission time, a signal transmission periodicity, a signal sending angle, a signal receiving angle, and another parameter that can be used to determine the relative location information.

Optionally, the first request message may include at least one of the following information: identification information of the first terminal device, identification information of the second terminal device, measurement requirement information, a measurement information type, measurement type information, trigger condition information, and action information.

The identification information of the first terminal device and the identification information of the second terminal device may be used by the first device to determine to obtain relative location information between specific terminal devices. It should be understood that when the second device requests to obtain relative location information between at least two terminal devices, the first request message may include identification information of the at least two terminal devices. In the following embodiments, a description in which relative location information between two terminal devices is requested is provided. A manner of determining relative location information between at least two terminal devices is similar to a manner of determining the relative location information between the two terminal devices. For brevity, details are not described herein again.

A specific representation form of identification information of a terminal device is not limited in this embodiment of this application. For example, the identification information of the terminal device may be external identification information, for example, a generic public subscription identifier (generic public subscription identifier, GPSI) (for example, a mobile phone number mentioned in 5G) or a mobile subscriber integrated services digital network (mobile subscriber integrated services digital network, MSISDN) (for example, a mobile phone number mentioned in 4G). A core network element may convert the external identification information into internal identification information, for example, a subscriber permanent identifier (subscriber permanent identifier, SUPI) (a terminal SIM card identifier mentioned in 5G), an international mobile subscriber identity (international mobile subscriber identity, IMSI) (a terminal SIM card identifier mentioned in 4G), or a globally unique temporary UE identity (globally unique temporary UE identity, GUTI). Alternatively, the identification information of the terminal device in the first request message may be internal identification information. In other words, the identification information (for example, an external identifier) of the terminal device received by the core network element and the sent identification information (for example, an internal identifier) of the terminal device may have different representation forms.

The measurement requirement information indicates a response time requirement, a positioning precision requirement, a QoS class requirement, a positioning dimension requirement, and the like. For example, the response time requirement may indicate time, latency, or a frequency for obtaining the relative location information or the measurement information. The positioning precision requirement may indicate precision of the relative distance, for example, less than or equal to 1 meter. The positioning dimension requirement may indicate that the relative location information is one-dimensional positioning, two-dimensional positioning, or three-dimensional positioning. Further, the first device may determine, based on the measurement requirement information, how to perform ranging positioning. In addition, in this embodiment of this application, precision may alternatively be understood as accuracy.

The measurement information type indicates that the first request message is used to request the measurement information or the relative location information. In other words, the measurement information type indicates that the first request message is used to request a sidelink ranging service, and the sidelink ranging service corresponds to the relative location information or the measurement information. Then, the first device may determine, based on the measurement type information, to perform ranging, and return the measurement information or the relative location information.

The measurement type information indicates a type of the relative location information. The type of the relative location information is relative distance information, relative angle information, and relative positioning information. Then, the first device may determine, based on the measurement type information, specific parameters to be measured to determine the relative location information.

The trigger condition information indicates that the first terminal device and/or the second terminal device perform/performs a first action when the relative location information meets a first condition, and the action information indicates the first action. For example, the trigger condition information may indicate that two vehicles perform alarm actions when a relative distance between the two vehicles is less than a preset threshold. For another example, the trigger condition information may indicate that a vehicle performs an unlock action when a relative distance between the vehicle and a mobile phone is less than a preset threshold.

S220: The first device sends the relative location information or the measurement information to the second device in response to the first request message, and correspondingly, the second device receives the relative location information or the measurement information that is from the first device in response to the first request message.

It should be understood that, that the first device responds to the first request message means that the first device sends, to the second device based on content that is requested by using the first request message, the content that is requested. To be specific, if the first request message is used to request the measurement information, the first device sends the measurement information to the second device, or if the first request message is used to request the relative location information, the first device sends the relative location information to the second device.

When the second device requests the measurement information, and receives the first device from the first device, the method 200 may further include step S230.

Optionally, in S230, the second device determines the relative location information based on the measurement information.

For example, if the measurement information includes transmission time of a signal transmitted between the first terminal device and the second terminal device through the PC5 interface, the second device may obtain a relative distance through calculation based on the transmission time. A manner in which the relative location information is determined based on the measurement information is not limited in this application.

In this embodiment of this application, the first device may be the first terminal device, the second terminal device, a third terminal device, a mobility management network element (for example, the AMF network element shown in FIG. 1), or a gateway mobile location center network element (for example, the GMLC network element shown in FIG. 1). The second device may be the first terminal device, the second terminal device, the third terminal device, or an application function network element (for example, the AF network element shown in FIG. 1), and the first terminal device, the second terminal device, and the third terminal device are different terminal devices.

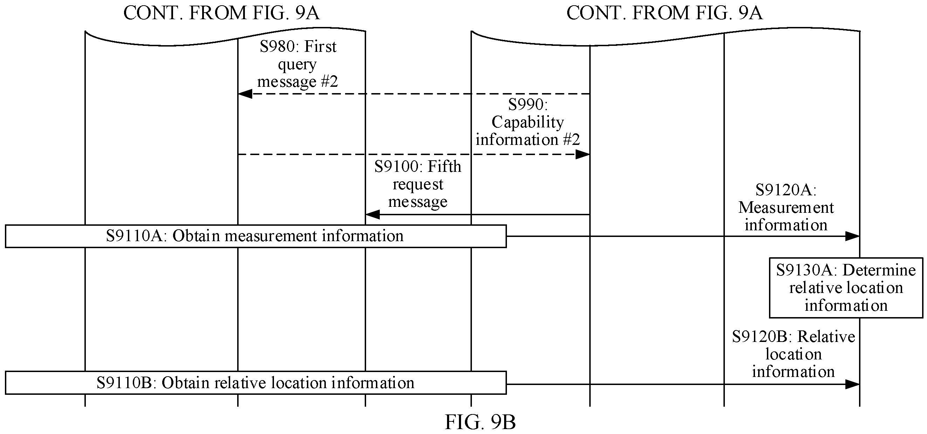

The following describes in detail the method shown in FIG. 2 with reference to FIG. 3 to FIG. 9A and FIG. 9B.

FIG. 3 is a schematic flowchart of a communication method when a first device is a first terminal device, and a second device is a third terminal device.

S310: The third terminal device sends a first request message to the first terminal device, and correspondingly, the first terminal device receives the first request message from the third terminal device.

For example, the first request message is a measurement request message for requesting measurement information, and the third terminal device sends the measurement request message to the first terminal device through a PC5 interface between the third terminal device and the first terminal device.

For content of the first request message, refer to the descriptions in step S210. Details are not described herein again.

S320: The first terminal device and a second terminal device obtain the measurement information.

The first terminal device and the second terminal device may obtain the measurement information by performing sidelink ranging.

For example, the first terminal device and the second terminal device may mutually receive and send a measurement reference signal through a PC5 interface between the first terminal device and the second terminal device, and obtain the measurement information by recording parameters such as time, a location, or an angle for sending the reference signal, and time, a location, or an angle for receiving the reference signal.

S330: The first terminal device sends the measurement information to the third terminal device in response to the first request message, and correspondingly, the third terminal device receives the measurement information that is from the first terminal device in response to the first request message.

For example, the first terminal device sends a measurement response message to the third terminal device in response to the measurement request message through the PC5 interface, and the measurement response message carries the measurement information.

S340: The third terminal device determines relative location information based on the measurement information.

For a manner in which the relative location information is determined based on the measurement information, refer to the descriptions in step S230. Details are not described herein again.

Optionally, the third terminal device may report the relative location information to a related application server (for example, an AF network element, an AS, or an LCS client, and the following uses the AF network element as an example for description).

For example, the third terminal device may send the relative location information to the AF network element through an UP plane.

Alternatively, for another example, the third terminal device may send a NAS message to an AMF network element. The NAS message includes the relative location information, and the NAS message may further include identification information of an AF network element and identification information of an NEF network element. If the NAS message does not include the identification information of the NEF network element, the AMF network element may obtain the identification information of the NEF network element from context information of the third terminal device, or the AMF network element may select an NEF network element for the third terminal device. Then, the AMF network element may send the relative location information to the AF network element through the NEF network element.

Alternatively, for another example, the third terminal device may send a NAS message to an AMF network element. The NAS message includes the relative location information, and the NAS message may further include identification information of an AF network element and identification information of a GMLC network element. If the NAS message does not include the identification information of the GMLC network element, the AMF network element may obtain the identification information of the GMLC network element from context information of the third terminal device, or the AMF network element may select a GMLC network element for the third terminal device. Then, the AMF network element may send the relative location information to the AF network element through the GMLC network element.

FIG. 4 is a schematic flowchart of another communication method when a first device is a first terminal device, and a second device is a third terminal device.

S410: The third terminal device sends a first request message to the first terminal device, and correspondingly, the first terminal device receives the first request message from the third terminal device.

For example, the first request message is a location request message for requesting relative location information, and the third terminal device sends the location request message to the first terminal device through a PC5 interface between the third terminal device and the first terminal device.

For content of the first request message, refer to the descriptions in step S210. Details are not described herein again.

S420: The first terminal device obtains the relative location information.

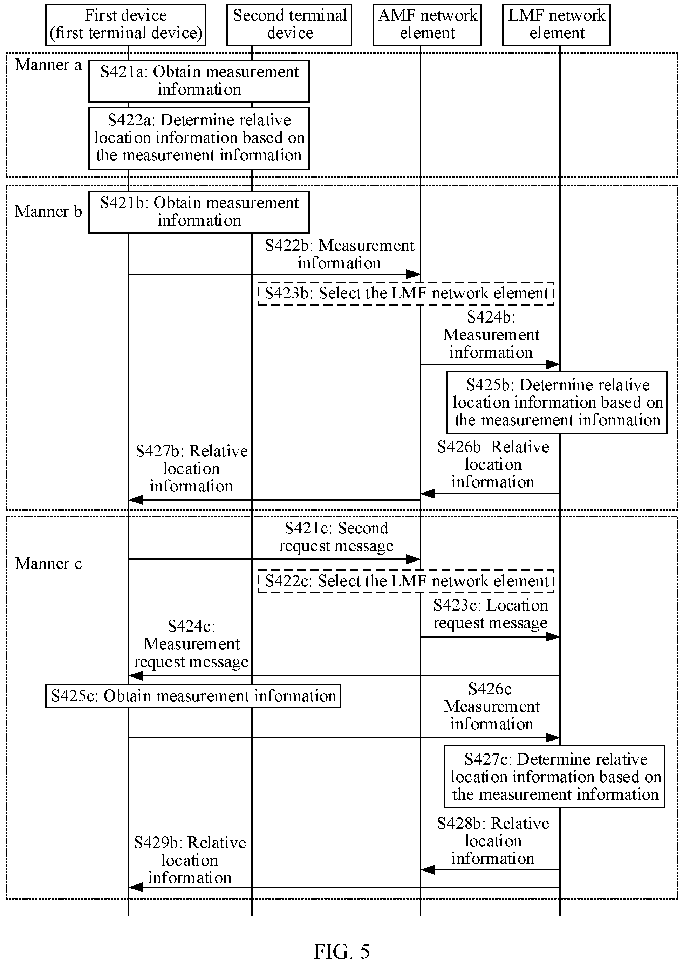

The first terminal device may obtain the relative location information through calculation after performing ranging positioning to obtain measurement information. Alternatively, the first terminal device may send measurement information to an LMF network element after performing ranging positioning to obtain the measurement information, and the LMF network element calculates the relative location information. Alternatively, the first terminal device may send a request message to an LMF network element based on the first request message, to request the LMF network element to calculate the relative location information. For a specific manner in which the first terminal device obtains the relative location information, refer to the following descriptions in FIG. 5.

S430: The first terminal device sends the relative location information to the third terminal device in response to the first request message, and correspondingly, the third terminal device receives the relative information that is from the first terminal device in response to the first request message.

For example, the first terminal device sends a location response message to the third terminal device in response to the location request message through the PC5 interface, and the location response message carries the measurement information.

Optionally, when the first request message in S410 further includes trigger condition information and/or action information, optionally, the method may further include step S440.

Optionally, in S440, the first terminal device performs a first action when the relative location information meets a first condition.

The first condition may be a condition indicated by the trigger condition information or a preset condition, and the first action may be an action indicated by the action information or a preset action.

It should be understood that although it is not shown in FIG. 4, the trigger condition information in the first request message may further indicate that the second terminal device performs a second action (which may be the same as or different from the first action) when the relative location information meets a second condition (which may be the same as or different from the first condition). In other words, the trigger condition information and the action information in the first request message may indicate that one or more terminal devices perform a corresponding action. A terminal device that needs to perform an action may obtain the trigger condition information, the action information, and the relative location information through another terminal device or a core network element, and perform a corresponding action.

Below, the FIG. 5 is a schematic flowchart of a method in which the first terminal device obtains the relative location information.

The first terminal device may obtain the relative location information in the following three manners.

### Manner a:

S421a: The first terminal device and the second terminal device obtain the measurement information.

For a manner in which the first terminal device and the second terminal device obtain the measurement information, refer to the descriptions in step S320. Details are not described herein again.

S422a: The first terminal device and the second terminal device obtain the relative location information.

For example, the first terminal device may obtain the relative location information through calculation based on the measurement information, or the second terminal device obtains the relative location information through calculation based on the measurement information, and sends the relative location information to the first terminal device.

Therefore, in Manner a, the first terminal device may autonomously obtain the relative location information through calculation based on the measurement information.

### Manner b:

S421b: The first terminal device and the second terminal device obtain the measurement information.

For a manner in which the first terminal device and the second terminal device obtain the measurement information, refer to the descriptions in step S320. Details are not described herein again.

S422b: The first terminal device sends the measurement information to an AMF network element, and correspondingly, the AMF network element receives the measurement information from the first terminal device.

The measurement information is used by the LMF network element to determine the relative location information.

For example, the first terminal device may send a location calculation request message to the AMF network element. The location calculation request message is used to request to calculate the relative location information, and the calculation request message includes the measurement information. The location calculation request message may further include at least one of the following information: measurement type information, a measurement information type, measurement requirement information, measurement algorithm information, and a PC5 RAT type.

The measurement type information, the measurement information type, and the measurement requirement information are similar to those described in the first request message in step S210. For brevity, details are not described herein again. The measurement algorithm information indicates a measurement algorithm corresponding to the measurement information, and the PC5 RAT type indicates a PC5 RAT used by the first terminal device to obtain the measurement information. The location calculation request message may further include other information that can assist the LMF network element in calculation. This is not particularly limited in this application.

Optionally, in S423b, the AMF network element selects the LMF network element.

For example, the AMF network element may select the LMF network element based on at least one of the following information: capability information and load information of the LMF network element, a PC5 RAT type of the first terminal device, a PC5 RAT type of the second terminal device, location information of the LMF network element, location information registered by the first terminal device, and location information registered by the second terminal device. A manner in which the AMF network element selects the LMF network element for calculating the relative location information is not limited in this application.

S424b: The AMF network element sends the measurement information to the LMF network element, and correspondingly, the LMF network element receives the measurement information from the AMF network element.

For example, the AMF network element sends the location calculation request message to the LMF network element. The location calculation request message includes the measurement information, and the location calculation request message sent by the AMF network element may alternatively be an Nlmf_location_determine location request message (Nlmf_Location_DetermineLocation request). The location calculation request message may further include at least one of the following information: the measurement type information, the measurement information type, the measurement requirement information, the measurement algorithm information, and the PC5 RAT type. For descriptions of the foregoing information, refer to the descriptions in step S422b.

S425b: The LMF network element determines the relative location information based on the measurement information.

For a manner in which the relative location information is determined based on the measurement information, refer to the descriptions in step S230. Details are not described herein again.

S426b: The LMF network element sends the relative location information to the AMF network element, and correspondingly, the AMF network element receives the relative location information from the LMF network element.

For example, the LMF network element sends a location calculation response message to the AMF network element in response to the location calculation request message. The calculation response message includes the relative location information. The location calculation response message sent by the LMF network element may alternatively be an Nlmf_location_determine location response message (Nlmf_Location_DetermineLocation response).

S427b: The AMF network element sends the relative location information to the first terminal device, and correspondingly, the first terminal device receives the relative location information from the AMF network element.

For example, the AMF network element sends the location calculation response message to the first terminal device in response to the location calculation request message sent by the first terminal device. The location calculation response message includes the relative location information.

Therefore, in Manner b, the first terminal device may send the measurement information to the LMF network element, and the LMF network element obtains the relative location information through calculation.

### Manner c:

S421c: The first terminal device sends a second request message to an AMF network element, and correspondingly, the AMF network element receives the second request message from the first terminal device.

The second request message is used to request the LMF network element to determine the relative location information. In other words, the second request message is used to request the relative location information.

The second request message may include at least one of the following information: measurement type information, a measurement information type, and measurement requirement information. Receiving of the foregoing information is similar to that described in the first request message in step S210. For brevity, details are not described herein again.

Optionally, in S422c, the AMF network element selects the LMF network element.

For descriptions in which the AMF network element selects the LMF network element, refer to the descriptions in step S423b. For brevity, details are not described herein again.

S423c: The AMF network element sends a location request message to the LMF network element, and correspondingly, the LMF network element receives the location request message from the AMF network element.

The location request message is used to request the LMF network element to determine the relative location information.

For example, the AMF network element sends the location request message to the LMF network element based on the second request message. The location request message may be an Nlmf_location_determine location request message (Nlmf_Location_DetermineLocation request). The location request message may include at least one of the following information: the measurement type information, the measurement information type, and the measurement requirement information.

S424c: The LMF network element sends a measurement request message to the first terminal device, and correspondingly, the first terminal device receives the measurement request message from the LMF network element.

The measurement request message is used to request the measurement information.

The measurement request message may include at least one of the following information: the information type and the measurement type information. The information type indicates that the first terminal device returns the measurement information (in other words, the first terminal device does not need to obtain the relative location information through calculation). The measurement type information is similar to that described in the first request message in step S210. For brevity, details are not described herein again. For example, if the measurement type information indicates that the relative location information is a relative distance, the first terminal device returns, based on the measurement type information and the information type, the measurement information for determining the relative distance.

S425c: The first terminal device and the second terminal device obtain the measurement information.

For a manner in which the first terminal device and the second terminal device obtain the measurement information, refer to the descriptions in step S320. Details are not described herein again.

S426c: The first terminal device sends the measurement information to the LMF network element, and correspondingly, the LMF network element receives the measurement information from the first terminal device.

For example, the first terminal device may send a location information providing message to the LMF network element in response to the measurement request message. The location providing message includes the measurement information. Optionally, the location information providing message further includes a measurement type.

S427c: The LMF network element determines the relative location information based on the measurement information.

For a manner in which the relative location information is determined based on the measurement information, refer to the descriptions in step S230. Details are not described herein again.

S428c: The LMF network element sends the relative location information to the AMF network element, and correspondingly, the AMF network element receives the relative location information from the LMF network element.

For example, the LMF network element sends the location response message to the AMF network element in response to the location request message. The location response message includes the relative location information. The location response message sent by the LMF network element may alternatively be an Nlmf_location_determine location response message (Nlmf_Location_DetermineLocation response).

S429c: The AMF network element sends the relative location information to the first terminal device in response to the second request message, and correspondingly, the first terminal device receives the relative location information that is from the AMF network element in response to the second request message.

Therefore, in Manner c, the first terminal device may request the LMF network element to determine the relative location information, and the LMF network element initiates a ranging procedure, and sends the relative location information to the first terminal device after determining the relative location information.

The foregoing uses the first terminal device as an example to describe the three manners in which the first terminal device obtains the relative location information. It should be understood that the second terminal device may also obtain the relative location information in a similar manner. For brevity, details are not described herein again.

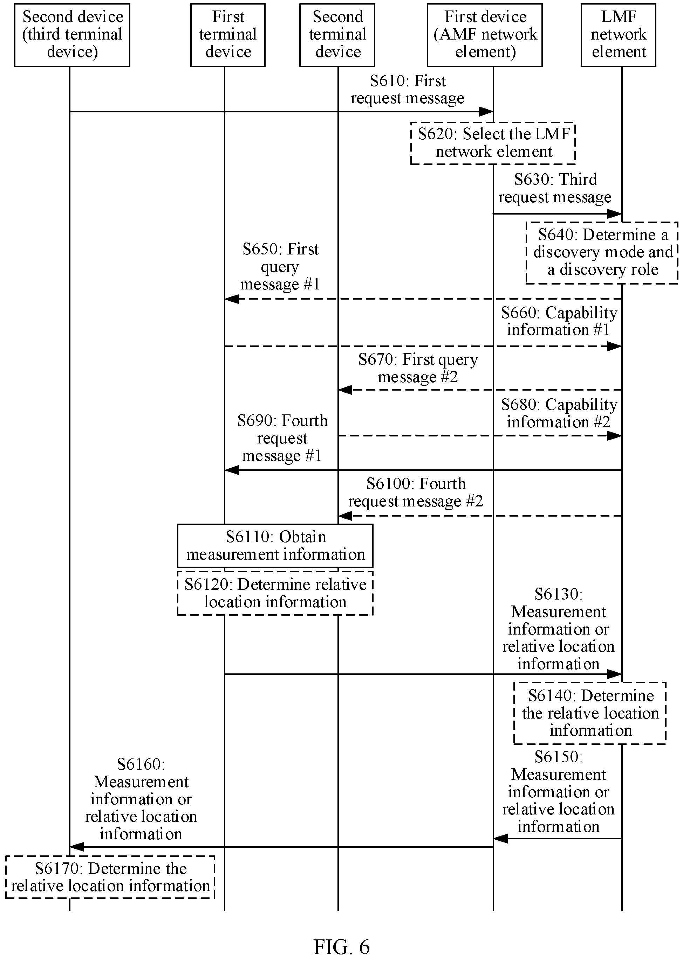

FIG. 6 is a schematic flowchart of a communication method when a first device is an AMF network element, and a second device is a third terminal device.

S610: The third terminal device sends a first request message to the AMF network element, and correspondingly, the AMF network element receives the first request message from the third terminal device.

For content of the first request message, refer to the descriptions in step S210. Details are not described herein again.

Optionally, in S620, the AMF network element selects an LMF network element.

For descriptions in which the AMF network element selects the LMF network element, refer to the descriptions in step S423b. For brevity, details are not described herein again.

S630: The AMF network element sends a third request message to the LMF network element, and correspondingly, the LMF network element receives the third request message from the AMF network element.

The third request message is used to request measurement information or relative location information.

The third request message may include at least one of the following information: identification information of a first terminal device, identification information of a second terminal device, measurement requirement information, a measurement information type, measurement type information, trigger condition information, and action information. For the foregoing information, refer to the descriptions in step S210.

It should be understood that the third request message corresponds to information requested by using the first request message. When the first request message is used to request the measurement information, the third request message is used to request the measurement information. When the first request message is used to request the relative location information, the third request message is used to request the relative location information.

Optionally, in S640, the LMF network element determines a discovery mode and a discovery role.

The discovery mode is that the first terminal device discovers the second terminal device through a PC5 interface, or the second terminal device discovers the first terminal device through a PC5 interface. In other words, the discovery mode indicates that the first terminal device and the second terminal device perform discovery through the PC5 interface. Then, the first terminal device and the second terminal device may obtain the measurement information by using the discovery mode. For example, the discovery mode may be a discovery mode A or a discovery mode B.

The discovery role indicates a role of the first terminal device in the discovery mode and a role of the second terminal device in the discovery mode. In other words, the discovery role indicates that the first terminal device is a discoverer terminal device (a discoverer UE), a discoveree terminal device (a discoveree UE), an announcing terminal device (an announcing UE), or a monitoring terminal device in the discovery mode, and correspondingly, the second terminal device is a discoverer terminal device, a discoveree terminal device, an announcing terminal device, or a monitoring terminal device in the discovery mode.

The LMF network element may further query whether the first terminal device and the second terminal device support a ranging capability. The method may further include steps S650 to S680. Alternatively, the first terminal device and the second terminal device may actively report a capability. In this case, the method may include steps S660 and S680.

Optionally, in S650, the LMF network element sends a first query message #1 to the first terminal device, and correspondingly, the first terminal device receives the first query message #1 from the LMF network element.

The first query message #1 is used to request capability information #1. The capability information #1 may include at least one of the following information: information indicating whether the first terminal device supports obtaining of the measurement information, information indicating whether the first terminal device supports obtaining of the relative location information, a discovery mode supported by the first terminal device, a capability of the first terminal device to communicate through an interface between the first terminal device and the second terminal device (for example, PC5 discovery), a type of the interface (for example, a PC5 RAT type), precision that is of obtaining the measurement information and that is supported by the first terminal device, and precision that is of obtaining the relative location information and that is supported by the first terminal device.

Optionally, in S660, the first terminal device sends the capability information #1 to the LMF network element, and correspondingly, the LMF network element receives the capability information #1 from the first terminal device.

Then, the LMF network element may determine, based on the capability information #1, whether the first terminal device can meet a request of the first request message.

Optionally, in S670, the LMF network element sends a first query message #2 to the second terminal device, and correspondingly, the second terminal device receives the first query message #2 from the LMF network element.

The first query message #2 is used to request capability information #2. The capability information #2 may include at least one of the following information: information indicating whether the second terminal device supports obtaining of the measurement information, information indicating whether the second terminal device supports obtaining of the relative location information, a discovery mode supported by the second terminal device, a capability of the second terminal device to communicate through the interface between the second terminal device and the second terminal device (for example, PCT discovery), the type of the interface (for example, the PC5 RAT type), precision that is of obtaining the measurement information and that is supported by the second terminal device, and precision that is of obtaining the relative location information and that is supported by the second terminal device.

Optionally, in S680, the second terminal device sends the capability information #2 to the LMF network element, and correspondingly, the LMF network element receives the capability information #2 from the second terminal device.

Then, the LMF network element may determine, based on the capability information #2, whether the second terminal device can meet the request of the first request message.

S690: The LMF network element sends a fourth request message #1 to the first terminal device, and correspondingly, the first terminal device receives the fourth request message #1 from the LMF network element.

The fourth request message #1 is used to request to obtain the measurement information or the relative location information through the interface (for example, the PC5 interface) between the first terminal device and the second terminal device. Optionally, the fourth request message #1 includes at least one of the following information: ranging indication information, the identification information of the first terminal device, the identification information of the second terminal device, an information type, the measurement type information, trigger condition information corresponding to the first terminal device, action information corresponding to the first terminal device, and a discovery role of the first terminal device in the discovery mode. The ranging indication information indicates that the first terminal device performs ranging, and the information type indicates that the first terminal device returns the measurement information or the relative location information. For the measurement type information, the trigger condition information, and the action information, refer to the descriptions in step S210.

It should be understood that when the first request message is used to request the measurement information, the fourth request message #1 is used to request the measurement information. When the first request message is used to request the relative location information, the fourth request message #1 is used to request the measurement information or the relative location information. When the fourth request message #1 is used to request the measurement information, the LMF network element may calculate the relative location information. When the fourth request message #1 is used to request the relative location information, the first terminal device and the second terminal device may obtain the relative location information.

It should be further understood that content included in the fourth request message #1 is determined in a ranging manner and based on the discovery role of the first terminal device in the discovery mode. If the LMF network element determines, in the ranging manner, that the LMF network element may further send, to the second terminal device, a message for requesting the measurement information or the relative location information, optionally, step S6100 may be further performed.

Optionally, in S6100, the LMF network element sends a fourth request message #2 to the second terminal device, and correspondingly, the second terminal device receives the fourth request message #2 from the LMF network element.

The fourth request message #2 is used to request the measurement information or the relative location information. Optionally, the fourth request message #2 includes at least one of the following information: indication information, the identification information of the second terminal device, the identification information of the first terminal device, the information type, the measurement type information, trigger condition information corresponding to the second terminal device, action information corresponding to the second terminal device, and a discovery role of the second terminal device in the discovery mode. For the foregoing information, refer to the descriptions in step S690.

It should be understood that when the first request message is used to request the measurement information, the fourth request message #2 is used to request the measurement information. When the first request message is used to request the relative location information, the fourth request message #2 is used to request the measurement information or the relative location information. When the fourth request message #2 is used to request the measurement information, the LMF network element may calculate the relative location information. When the fourth request message #2 is used to request the relative location information, the first terminal device and the second terminal device may obtain the relative location information.

It should be further understood that content included in the fourth request message #2 is determined in a ranging manner and based on the discovery role of the second terminal device in the discovery mode. For example, when the second terminal device is the discoveree terminal device in the discovery mode, the fourth request message #4 may carry the indication information, the identification information of the second terminal device, the identification information of the first terminal device, the information type, and the measurement type information.

S6110: The first terminal device and the second terminal device obtain the measurement information.

For a manner in which the first terminal device and the second terminal device obtain the measurement information, refer to the descriptions in step S320. Details are not described herein again.

If the fourth request message is used to request the relative location information, the method further includes step S6120.

Optionally, in S6120, the first terminal device determines the relative location information based on the measurement information.

For a manner in which the relative location information is determined based on the measurement information, refer to the descriptions in step S230. Details are not described herein again.

S6130: The first terminal device sends the measurement information or the relative location information to the LMF network element in response to the fourth request message #1, and correspondingly, the LMF network element receives the measurement information or the relative location information that is from the first terminal device in response to the fourth request message #1.

If the first request message is used to request the relative location information, and the fourth request message is used to request the measurement information, the method may further include step S6140.

Optionally, in S6140, the LMF network element determines the relative location information based on the measurement information.

For a manner in which the relative location information is determined based on the measurement information, refer to the descriptions in step S230. Details are not described herein again.

S6150: The LMF network element sends the measurement information or the relative location information to the AMF network element in response to the third request message, and correspondingly, the AMF network element receives the measurement information or the relative location information that is from the LMF network element in response to the third request message.

S6160: The AMF network element sends the measurement information or the relative location information to the third terminal device in response to the first request message, and correspondingly, the third terminal device receives the measurement information or the relative location information that is from the AMF network element in response to the first request message.

If the third terminal device receives the measurement information when the first request message is used to request the measurement information, the method may further include step S6170.

Optionally, in S6170, the third terminal device determines the relative location information based on the measurement information.

For a manner in which the relative location information is determined based on the measurement information, refer to the descriptions in step S230. Details are not described herein again.

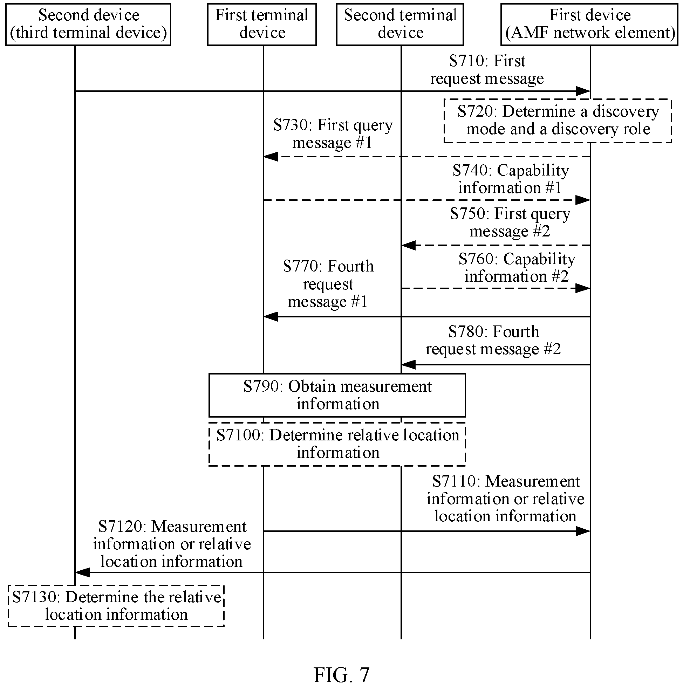

FIG. 7 is a schematic flowchart of another communication method when a first device is an AMF network element, and a second device is a third terminal device.

S710: The third terminal device sends a first request message to the AMF network element, and correspondingly, the AMF network element receives the first request message from the third terminal device.

For content of the first request message, refer to the descriptions in step S210. Details are not described herein again.

Optionally, in S720, the AMF network element determines a discovery mode and a discovery role.

For a manner in which the discovery mode and the discovery role are determined is similar to that described in step S640. Details are not described herein again.

The AMF network element may further query whether a first terminal device and a second terminal device support a ranging capability. The method may further include steps S730 to S760.

Optionally, in S730, the AMF network element sends a first query message #1 to the first terminal device, and correspondingly, the first terminal device receives the first query message #1 from the AMF network element.

The first query message #1 is used to request capability information #1. For content of the first query message #1 and the capability information #1, refer to the descriptions in step S650. Details are not described herein again.

Optionally, in S740, the first terminal device sends the capability information #1 to the AMF network element, and correspondingly, the AMF network element receives the capability information #1 from the first terminal device.

Then, the AMF network element may determine, based on the capability information #1, whether the first terminal device can meet a request of the first request message.

Optionally, in S750, the AMF network element sends a first query message #2 to the second terminal device, and correspondingly, the second terminal device receives the first query message #2 from the AMF network element.

The first query message #2 is used to request capability information #2. For content of the first query message #2 and the capability information #2, refer to the descriptions in step S670. Details are not described herein again.

Optionally, in S760, the second terminal device sends the capability information #2 to the AMF network element, and correspondingly, the AMF network element receives the capability information #2 from the second terminal device.

Then, the AMF network element may determine, based on the capability information #2, whether the second terminal device can meet the request of the first request message.

S770: The AMF network element sends a fourth request message #1 to the first terminal device, and correspondingly, the first terminal device receives the fourth request message #1 from the AMF network element.

For content included in the fourth request message #1, refer to the descriptions in step S690. Details are not described herein again.

It should be understood that the fourth request message #1 corresponds to the first request message. When the first request message is used to request measurement information, the fourth request message #1 is used to request the measurement information. When the first request message is used to request relative location information, the fourth request message #1 is used to request the relative location information.

It should be further understood that the content included in the fourth request message #1 is determined in a ranging manner and based on a discovery role of the first terminal device in the discovery mode. If the AMF network element determines, in the ranging manner, that the AMF network element may further send, to the second terminal device, a message for requesting the measurement information or the relative location information, optionally, step S780 may be further performed.

Optionally, in S780, the AMF network element sends a fourth request message #2 to the second terminal device, and correspondingly, the second terminal device receives the fourth request message #2 from the AMF network element.

For content included in the fourth request message #2, refer to the descriptions in step S6100. Details are not described herein again.

It should be understood that the fourth request message #2 corresponds to the first request message. When the first request message is used to request the measurement information, the fourth request message #2 is used to request the measurement information. When the first request message is used to request the relative location information, the fourth request message #2 is used to request the relative location information.

S790: The first terminal device and the second terminal device obtain the measurement information.

For a manner in which the first terminal device and the second terminal device obtain the measurement information, refer to the descriptions in step S320. Details are not described herein again.

If the first request message is used to request the relative location information, and the fourth request message is used to request the relative location information, in the method, step S7100 may be further performed.

Optionally, in S7100, the first terminal device determines the relative location information based on the measurement information.

For a manner in which the relative location information is determined based on the measurement information, refer to the descriptions in step S230. Details are not described herein again.

S7110: The first terminal device sends the measurement information or the relative location information to the AMF network element in response to the fourth request message #1, and correspondingly, the AMF network element receives the measurement information or the relative location information that is from the first terminal device in response to the fourth request message #1.

S7120: The AMF network element sends the measurement information or the relative location information to the third terminal device in response to the first request message, and correspondingly, the third terminal device receives the measurement information or the relative location information that is from the AMF network element in response to the first request message.

If the third terminal device receives the measurement information when the first request message is used to request the measurement information, the method may further include step S7130.

Optionally, in S7130, the third terminal device determines the relative location information based on the measurement information.

For a manner in which the relative location information is determined based on the measurement information, refer to the descriptions in step S230. Details are not described herein again.

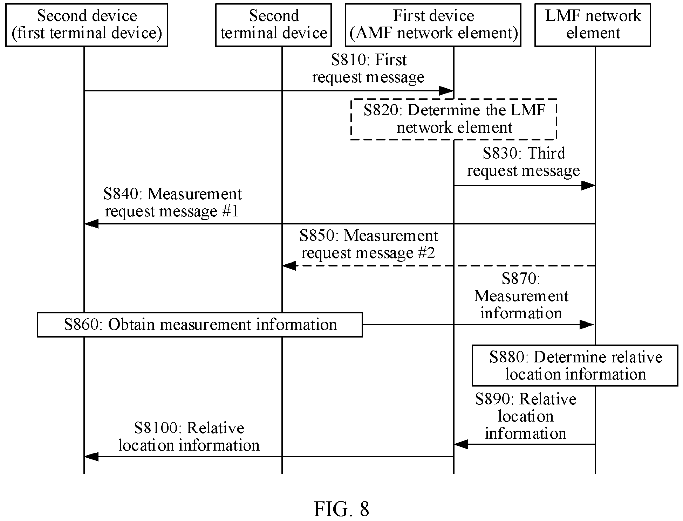

FIG. 8 is a schematic flowchart of a communication method when a first device is an AMF network element, and a second device is a first terminal device.

S810: The first terminal device sends a first request message to the AMF network element, and correspondingly, the AMF network element receives the first request message from the first terminal device.

The first request message is used to request relative location information. For content included in the first request message, refer to the descriptions in step S210. Details are not described herein again.

Optionally, in S820, the AMF network element selects an LMF network element.

S830: The AMF network element sends a third request message to the LMF network element, and correspondingly, the LMF network element receives the third request message from the AMF network element.

The third request message is used to request the relative location information.

The third request message may include at least one of the following information: identification information of the first terminal device, identification information of a second terminal device, measurement requirement information, a measurement information type, measurement type information, trigger condition information, and action information. For the foregoing information, refer to the descriptions in step S210.

S840: The LMF network element sends a measurement request message #1 to the first terminal device, and correspondingly, the first terminal device receives the measurement request message #1 from the LMF network element.

The measurement request message #1 is used to request measurement information. Optionally, the measurement request message #1 includes indication information. The indication information indicates that the first terminal device performs ranging and returns the measurement information.

It should be understood that content included in the measurement request message #1 is determined in a ranging manner and based on a discovery role of the first terminal device in a discovery mode. If the LMF network element determines, in the ranging manner, that the LMF network element may further send, to the second terminal device, a message for requesting the measurement information, optionally, step S850 may be further performed.

Optionally, in S850, the LMF network element sends a measurement request message #2 to the second terminal device, and correspondingly, the second terminal device receives the measurement request message #2 from the LMF network element.

The measurement request message #2 is used to request the measurement information. Optionally, the measurement request message #2 includes indication information. The indication information indicates that the second terminal device performs ranging and returns the measurement information.

It should be understood that content included in the measurement request message #2 is determined in a ranging manner and based on a discovery role of the second terminal device in the discovery mode.

S860: The first terminal device and the second terminal device obtain the measurement information.

For a manner in which the first terminal device and the second terminal device obtain the measurement information, refer to the descriptions in step S320. Details are not described herein again.

S870: The first terminal device sends the measurement information to the LMF network element in response to the measurement request message #1, and correspondingly, the LMF network element receives the measurement information that is from the first terminal device in response to the measurement request message #1.

S880: The LMF network element determines the relative location information based on the measurement information.

For a manner in which the relative location information is determined based on the measurement information, refer to the descriptions in step S230. Details are not described herein again.

S890: The LMF network element sends the relative location information to the AMF network element in response to the third request message, and correspondingly, the AMF network element receives the relative location information that is from the LMF network element in response to the third request message.

S8100: The AMF network element sends the relative location information to the first terminal device in response to the first request message, and correspondingly, the first terminal device receives the relative location information that is from the AMF network element in response to the first request message.

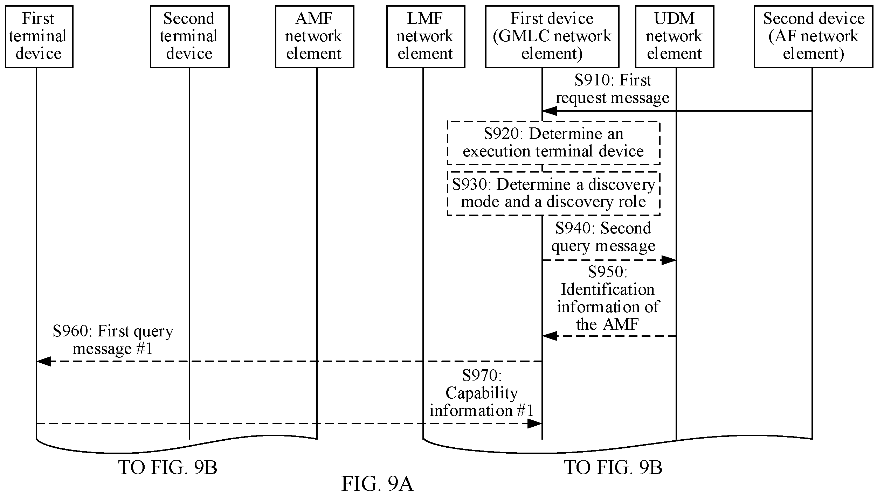

FIG. 9A and FIG. 9B are a schematic flowchart of a communication method when a first device is a GMLC network element, and a second device is an AF network element.

S910: The AF network element sends a first request message to the GMLC network element, and correspondingly, the GMLC network element receives the first request message from the AF network element.

For content of the first request message, refer to the descriptions in step S210. Details are not described herein again.

Optionally, in S920, the GMLC network element determines an execution terminal device.

The execution terminal device is a terminal device that communicates with a core network element in a ranging process (a process of obtaining measurement information through a PC5 interface), or a terminal device that communicates with a core network element to transmit measurement information or relative location information.

It should be understood that in FIG. 9A and FIG. 9B, an example in which a first terminal device is the execution terminal device is used, and no limitation is constituted on this application. Either the first terminal device or a second terminal device may be used as the execution terminal device.

For example, the GMLC network element may randomly select the first terminal device or the second terminal device as the execution terminal device.

Alternatively, for another example, when the first request message includes trigger condition information and action information that correspond to the first terminal device, the GMLC network element may determine, as the execution terminal device, a terminal device that performs the action information in the two terminal devices. For example, when the second terminal device corresponds to trigger condition information and action information, the GMLC network element determines the second terminal device as the execution terminal device.

Alternatively, for another example, the first request message may further include indication information indicating the execution terminal device, so that the GMLC network element may determine the execution terminal device based on the indication information.

Optionally, in S930, the GMLC network element determines a discovery mode and a discovery role.

For a manner in which the discovery mode and the discovery role are determined is similar to that described in step S640. Details are not described herein again.

Optionally, in S940, the GMLC network element sends a second query message to a UDM network element, and correspondingly, the UDM network element receives the second query message from the GMLC network element.

The second query message (for example, an Nudm - UECM _get request) is used to request identification information of an AMF network element corresponding to the execution terminal device. The second query message may include identification information of the execution terminal device (the first terminal device).

Optionally, in S950, the UDM sends the identification information of the AMF network element to the GMLC network element, and correspondingly, the GMLC network element receives the identification information of the AMF network element from the UDM network element.

For example, the UDM network element sends a second response message (for example, an Nudm_UECM_get response) to the GMLC network element in response to the second query message. The second response message includes the identification information of the AMF network element. Optionally, the second response message may further include the identification information of the execution terminal device.

The AMF network element may further query whether the first terminal device and the second terminal device support a ranging capability. The method may further include steps S960 to S990.

Optionally, in S960, the GMLC network element sends a first query message #1 to the first terminal device, and correspondingly, the first terminal device receives the first query message #1 from the GMLC network element.

The first query message #1 is used to request capability information #1. For content of the first query message #1 and the capability information #1, refer to the descriptions in step S650. Details are not described herein again.

Optionally, in S970, the first terminal device sends the capability information #1 to the GMLC network element, and correspondingly, the GMLC network element receives the capability information #1 from the first terminal device.

Then, the GMLC network element may determine, based on the capability information #1, whether the first terminal device can meet a request of the first request message.

Optionally, in S980, the GMLC network element sends a first query message #2 to the second terminal device, and correspondingly, the second terminal device receives the first query message #2 from the GMLC network element.

The first query message #2 is used to request capability information #2. For content of the first query message #2 and the capability information #2, refer to the descriptions in step S670. Details are not described herein again.

Optionally, in S990, the second terminal device sends the capability information #2 to the GMLC network element, and correspondingly, the GMLC network element receives the capability information #2 from the second terminal device.

Then, the GMLC network element may determine, based on the capability information #2, whether the second terminal device can meet the request of the first request message.

S9100: The GMLC network element sends a fifth request message to the AMF network element, and correspondingly, the AMF network element receives the fifth request message from the GMLC network element.

The fifth request message is used to request the measurement information or the relative location information.

It should be understood that the fifth request message corresponds to the first request message. When the first request message is used to request the measurement information, the fifth request message is used to request the measurement information. When the first request message is used to request the relative location information, the fifth request message is used to request the relative location information.

When the fifth request message is used to request the measurement information, in the method, Manner A may be performed. When the fifth request message is used to request the relative location information, in the method, Manner B may be performed.

### Manner A:

S980A: The AMF network element obtains the measurement information.

The AMF network element may obtain the measurement information in the manner of obtaining the measurement information in step S620 to step S6130 shown in FIG. 6.

Alternatively, the AMF network element may obtain the measurement information by performing the method for obtaining the measurement information in steps S770 to S7110 shown in FIG. 7. Details are not described herein.

S990A: The AMF network element sends the measurement information to the AF network element in response to the first request message, and correspondingly, the AF network element receives the measurement information that is from the AMF network element in response to the first request message.

S9100A: The AF network element determines the relative location information based on the measurement information.

For a manner in which the relative location information is determined based on the measurement information, refer to the descriptions in step S230. Details are not described herein again.

### Manner B:

S980B: The AMF network element obtains the relative location information.

The AMF network element may obtain the relative location information in the manner of obtaining the relative location information in step S620 to step S6130 shown in FIG. 6.

Alternatively, the AMF network element may obtain the relative location information by performing the method for obtaining the relative location information in steps S770 to S7110 shown in FIG. 7. Details are not described herein.

S990B: The AMF network element sends the relative location information to the AF network element in response to the first request message, and correspondingly, the AF network element receives the relative location information that is from the AMF network element in response to the first request message.

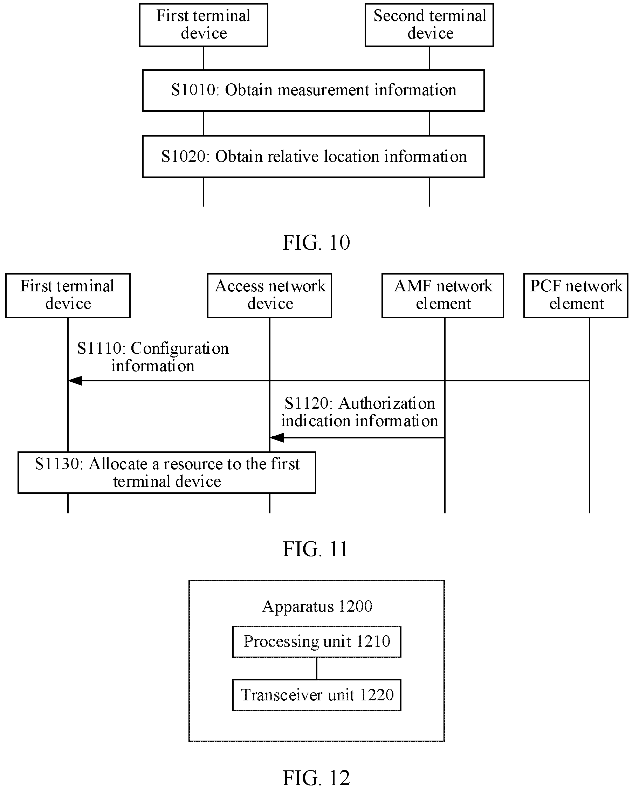

FIG. 2 to FIG. 9A and FIG. 9B separately describe manners in which the third terminal device requests the first terminal device or the AMF network element to perform ranging, the first terminal device requests the AMF network element to perform ranging, and the AF network element requests the GMLC network element to perform ranging. In a possible implementation, the first terminal device autonomously has a ranging requirement, and then the first terminal device may autonomously initiate a ranging procedure. This is described below with reference to FIG. 10.

FIG. 10 is a schematic flowchart of a wireless communication method according to an embodiment of this application.

S1010: A first terminal device obtains measurement information between the first terminal device and a second terminal device.

The first terminal device obtains the measurement information between the first terminal device and the second terminal device through an interface (for example, a PC5 interface) between the first terminal device and the second terminal device.

The first terminal device may perform a ranging procedure. For example, configuration information of the first terminal device indicates that the first terminal device performs the ranging procedure at preset time, or performs the ranging procedure when a preset condition is met. By way of example, and not limitation, configuration information of a vehicle may indicate that the vehicle initiates a ranging procedure for a surrounding terminal device when a vehicle speed reaches a preset threshold.

For a manner in which the first terminal device and the second terminal device obtain the measurement information, refer to the descriptions in step S320. Details are not described herein again.

S1020: The first terminal device obtains relative location information between the first terminal device and the second terminal device based on the measurement information.

In a possible implementation, the first terminal device has a capability of calculating the relative location information, and the first terminal device determines the first terminal device based on the measurement information. In this case, in the method, steps S421a and S422a described in FIG. 5 may be performed. Details are not described herein again.

In another possible implementation, the first terminal device may send the measurement information to an LMF network element, to request the LMF network element to calculate the relative location information. In this case, in the method, steps S422b to S427b described in FIG. 5 may be performed. Details are not described herein again.

It should be understood that FIG. 10 is described by using an example in which the first terminal device initiates the ranging procedure. A manner in which the second terminal device initiates a ranging procedure is similar. For brevity, details are not described herein again.

FIG. 2 to FIG. 10 describe how to obtain the relative location information between the first terminal device and the second terminal device. In embodiments of this application, before the first request message is sent in FIG. 2 to FIG. 9A and FIG. 9B, and the measurement information is obtained in FIG. 10, the first terminal device and the second terminal device may be further configured, so that the first terminal device and the second terminal device support ranging. This is described below with reference to FIG. 11.

FIG. 11 is a schematic flowchart of a method for configuring a first terminal device.

S 1110: A PCF network element sends configuration information to the first terminal device, and correspondingly, the first terminal device receives the configuration information from the PCF network element.

First configuration information (for example, UE SL ranging parameters provision) includes at least one of the following information: A configuration message includes at least one of the following information: authorized measurement type information, an authorized measurement parameter, an authorized measurement role, an identifier of a user authorized to use relative location information, an authorized discovery mode, an authorized discovery role, measurement mapping information, trigger condition information, and action information.

The measurement authorization information indicates that the first terminal device supports obtaining of the relative location information through an interface between the first terminal device and another terminal device, or indicates that the first terminal device supports use of ranging through a PC5 interface. For example, the measurement authorization information may indicate that the first terminal device supports obtaining of a relative distance and/or a relative angle and/or relative positioning between the first terminal device and the another terminal device through the PC5 interface.

The authorized measurement parameter (for example, an authorized QoS parameter) indicates at least one of the following parameters: a periodicity, precision, latency, and bandwidth. Then, the first terminal device may perform measurement by using the QoS parameter.

The authorized discovery mode indicates that a mode of discovering through the interface or a mode of being discovered through the interface is supported.

The authorized ranging role indicates a measurement role when the relative location information is obtained. For example, the ranging role indicates that the first terminal device is a target terminal device (a target UE), a reference terminal device (a reference UE), or an assistance terminal device (an assistance UE).

The reference terminal device is a terminal device that determines a reference plane or a reference direction in a service-based ranging and sidelink positioning process. The target terminal device is a terminal device that measures a distance, a direction, and/or a location based on the reference plane, the reference direction, and/or a location of the reference terminal device in the service-based ranging and sidelink positioning process. The assistance terminal device is a terminal device that provides assistance for direct ranging or sidelink positioning when the direct ranging or the sidelink positioning between the reference terminal device and the target terminal device is not supported. In addition, in a same ranging or sidelink positioning procedure, all participating terminal devices may serve as reference terminal devices or target terminal devices, and roles of the participating terminal devices may be interchanged.

The authorized discovery mode indicates that the first terminal device supports discovery or being discovered through the PC5 interface, and the authorized discovery role indicates that the first terminal device is a discoverer terminal device or a discoveree terminal device. For example, the authorized discovery mode indicates that the first terminal device supports being discovered by a second terminal device through the PC5 interface, and the first terminal device is the discoveree terminal device; or the first terminal device supports discovering of a second terminal device through the PC5 interface, and the first terminal device is the discoverer terminal device.

The measurement mapping information indicates a mapping relationship between a reference message (or a reference signal) for obtaining the relative location information and a destination layer 2 identifier. The measurement mapping information may be for assisting the use of ranging.

The trigger condition information indicates that the first terminal device performs a first action when the relative location information meets a first condition, and the action information indicates the first action. For example, the trigger condition information may indicate that two vehicles perform alarm actions when a relative distance between the two vehicles is less than a preset threshold. For another example, the trigger condition information may indicate that a vehicle performs an unlock action when a relative distance between the vehicle and a mobile phone is less than a preset threshold.

S 1120: An AFM network element sends authorization indication information to an access network device, and correspondingly, the access network device receives the authorization indication information from the AMF network element.

The authorization indication information indicates that the first terminal device supports the use of ranging through the PC5 interface.

The authorization indication information may include at least one of the following information: the authorized measurement parameter and the ranging role. For the authorized measurement parameter, refer to the descriptions in step S1110. Details are not described herein again. The ranging role indicates a role of the first terminal device during the use of ranging. For example, the ranging role indicates that the first terminal device is the target terminal device (the target UE), the reference terminal device (the reference UE), or the assistance terminal device (the assistance UE).

S1130: The access network device allocates, based on the authorization indication information, a resource for ranging to the first terminal device.

Then, the first terminal device may use the resource to perform the ranging processes shown in FIG. 2 to FIG. 10.

It should be understood that FIG. 11 uses an example in which the configuration information is configured for the first terminal device and the resource is allocated to the first terminal device. A process in which configuration information is configured for the second terminal device and a resource is allocated to the second terminal device is similar to that in FIG. 11. For brevity, details are not described herein again.

It should be understood that the examples shown in FIG. 2 to FIG. 11 in embodiments of this application are merely intended to help a person skilled in the art better understand embodiments of this application, but are not intended to limit the scope of embodiments of this application. It should be further understood that sequence numbers of the foregoing processes do not mean a sequence of performing the processes. The sequence of performing the processes should be determined based on functions and internal logic of the processes, and should not constitute any limitation on implementation processes of embodiments of this application.

It should be further understood that in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a network element (such as an AF, an AMF, or an SMF) in an existing network architecture is mainly used as an example for description. It should be understood that a specific form of the network element is not limited in embodiments of this application. For example, all network elements that can implement a same function in the future are applicable to embodiments of this application.

It may be understood that in the foregoing method embodiments, the method and the operation implemented by a network device (for example, each network element) may alternatively be implemented by a component (for example, a chip or a circuit) that can be used in the network device.

The wireless communication methods provided in embodiments of this application are described above in detail with reference to FIG. 2 to FIG. 11. The foregoing information obtaining method is mainly described from a perspective of interaction between the network elements. It may be understood that to implement the foregoing functions, each network element includes a corresponding hardware structure and/or software module for performing each function.

A person skilled in the art should be aware that with reference to units and algorithm steps in the examples described in embodiments disclosed in this specification, this application can be implemented by hardware or a combination of the hardware and computer software. Whether a function is performed by the hardware or the hardware driven by the computer software depends on particular applications and design constraints of the technical solutions. A person skilled in the art may use different methods to implement the described functions for each particular application, but it should not be considered that the implementation goes beyond the scope of this application.

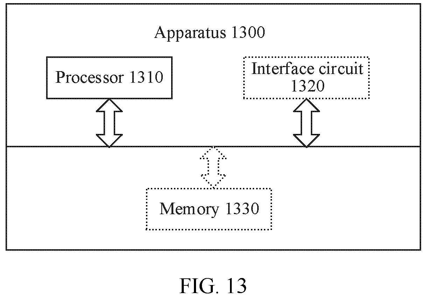

Communication apparatuses provided in embodiments of this application are described below in detail with reference to FIG. 12 and FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, the first device, the second device, the LMF network element, the first terminal device, and the access network device may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that in embodiments of this application, module division is an example, and is merely logical function division. During actual implementation, another division manner may be used. An example in which each functional module is obtained through division based on each corresponding function is used below for description.

FIG. 12 and FIG. 13 are diagrams of structures of possible communication apparatuses according to embodiments of this application. These communication apparatuses may be configured to implement functions of the first device, the second device, the LMF network element, the first terminal device, and the access network device in the foregoing method embodiments, and therefore can also implement beneficial effects of the foregoing method embodiments. In embodiments of this application, the communication apparatus may be a first device, a second device, an LMF network element, a first terminal device, or an access network device, or may be a module (for example, a chip) in the first device, the second device, the LMF network element, the first terminal device, or the access network device.

As shown in FIG. 12, a communication apparatus 1200 includes a processing unit 1210 and a transceiver unit 1220. The communication apparatus 1200 is configured to implement functions of the access network device in the method embodiments shown in FIG. 2 to FIG. 10. Alternatively, the communication apparatus 1200 may include a module configured to implement any one of functions or operations of the access network device in the method embodiments shown in FIG. 2 to FIG. 10. The module may be all or partially implemented by using software, hardware, firmware, or any combination thereof.

When the communication apparatus 1200 is configured to implement functions of the first device in the method embodiments shown in FIG. 2 to FIG. 10, the transceiver unit 1220 is configured to receive a first request message from a second device. The first request message is used to request relative location information between a first terminal device and a second terminal device, or the first request message is used to request measurement information between the first terminal device and the second terminal device. The measurement information is used to determine the relative location information. The relative location information includes at least one of the following location information: relative positioning information, relative distance information, and relative angle information. The processing unit 1210 is configured to generate the relative location information or the measurement information based on the first request message. The transceiver unit 1220 is further configured to send the relative location information or the measurement information to the second device in response to the first request message.

Therefore, in this application, the first device may obtain, upon a request, relative location information between two terminal devices or measurement information that is between the two terminal devices and that is for determining the relative location information. Then, in a scenario in which relative location information between terminal devices is needed, the first device may obtain measurement information or the relative information through an interface between the terminal devices, and may not need to obtain absolute location information of the terminal devices. This supports more application scenarios.

For more detailed descriptions of the processing unit 1210 and the transceiver unit 1220, directly refer to the related descriptions in the method embodiments shown in FIG. 2 to FIG. 10. Details are not described herein again.

When the communication apparatus 1200 is configured to implement functions of the LMF network element in the method embodiments shown in FIG. 2 to FIG. 10, the processing unit 1210 is configured to generate a request message; and the transceiver unit 1220 is configured to send the request message to a first terminal device. The request message is used to request to obtain measurement information or relative location information between the first terminal device and a second terminal device through an interface between the first terminal device and the second terminal device. The relative location information includes at least one of the following location information: relative positioning information, relative distance information, and relative angle information. The transceiver unit 1220 is further configured to receive measurement information or relative location information that is from the first terminal device in response to the request message.

Therefore, in this application, the LMF network element may request the first terminal device to perform measurement through an interface between terminal devices, to obtain needed relative location information or needed measurement information, so that absolute location information of the terminal devices may not need to be obtained, and more application scenarios can be supported.

For more detailed descriptions of the processing unit 1210 and the transceiver unit 1220, directly refer to the related descriptions in the method embodiments shown in FIG. 2 to FIG. 10. Details are not described herein again.

When the communication apparatus 1200 is configured to implement functions of the second device in the method embodiments shown in FIG. 2 to FIG. 10, the transceiver unit 1220 is configured to send a first request message to a first device. The first request message is used to request relative location information between a first terminal device and a second terminal device, or the first request message is used to request measurement information between the first terminal device and the second terminal device. The measurement information is used to determine the relative location information. The relative location information includes at least one of the following location information: relative positioning information, relative distance information, and relative angle information. The transceiver unit 1220 is further configured to receive the measurement information or the relative location information that is from the first device in response to the first request message. When the transceiver unit 1220 is further configured to receive the measurement information, the processing unit 1210 is configured to determine the relative location information based on the measurement information.

Therefore, in this application, the first device may obtain, upon a request, relative location information between two terminal devices or measurement information that is between the two terminal devices and that is for determining the relative location information. Then, in a scenario in which relative location information between terminal devices is needed, the first device may obtain measurement information or the relative information through an interface between the terminal devices, and may not need to obtain absolute location information of the terminal devices. This supports more application scenarios.

For more detailed descriptions of the processing unit 1210 and the transceiver unit 1220, directly refer to the related descriptions in the method embodiments shown in FIG. 2 to FIG. 10. Details are not described herein again.

When the communication apparatus 1200 is configured to implement functions of the first terminal device in the method embodiments shown in FIG. 2 to FIG. 10, the processing unit 1210 is configured to obtain measurement information between the first terminal device and a second terminal device through an interface between the first terminal device and the second terminal device. The processing unit 1210 is further configured to obtain relative location information between the first terminal device and the second terminal device based on the measurement information.

Therefore, in this application, the first terminal device may perform a measurement procedure through an interface between terminal devices, to obtain needed relative location information or needed measurement information, so that absolute location information of the terminal devices may not need to be obtained, and more application scenarios can be supported.

For more detailed descriptions of the processing unit 1210 and the transceiver unit 1220, directly refer to the related descriptions in the method embodiments shown in FIG. 2 to FIG. 10. Details are not described herein again.

When the communication apparatus 1200 is configured to implement functions of the access network device in the method embodiments shown in FIG. 2 to FIG. 10, the transceiver unit 1220 is configured to receive authorization indication information from an AMF network element. The authorization indication information indicates that a first terminal device is authorized to obtain measurement information or relative location information through an interface between the first terminal device and a second terminal device. The measurement information is used to determine the relative location information. The relative location information includes at least one of the following location information: relative positioning information, relative distance information, and relative angle information. The processing unit 1210 is configured to allocate, based on the authorization indication information, a resource for ranging to the first terminal device.

Therefore, in this application, the access network device learns, based on the authorization indication information, that the first terminal device supports obtaining of the measurement information or the relative location information through the interface between the first terminal device and the second terminal device, and may allocate the resource for the measurement to the first terminal device, so that the first terminal device may perform a measurement procedure through an interface between terminal devices, to obtain needed relative location information or needed measurement information, so that absolute location information of the terminal devices may not need to be obtained, and more application scenarios can be supported.

For more detailed descriptions of the processing unit 1210 and the transceiver unit 1220, directly refer to the related descriptions in the method embodiments shown in FIG. 2 to FIG. 10. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run instructions, or store data generated after the processor 1310 runs instructions.

When the communication apparatus 1300 is configured to implement the methods shown in FIG. 2 to FIG. 6, the processor 1310 is configured to implement a function of the processing unit 1210, and the interface circuit 1320 is configured to implement a function of the transceiver unit 1220 or functions of the transceiver unit 1220 and the processing unit 1210.

When the communication apparatus is a chip used in an access network device, the chip in the access network device implements a function of the access network device in the foregoing method embodiments. The chip in the access network device receives information from another module (for example, a radio frequency module or an antenna) in the access network device, where the information is sent by another network element to the access network device. Alternatively, the chip in the access network device sends information to another module (for example, a radio frequency module or an antenna) in another network element, where the information is sent by the access network device to the another network element.

When the communication apparatus is a chip used in a first device, the chip in the first device implements a function of the first device in the foregoing method embodiments. The chip in the first device receives information from another module (for example, a radio frequency module or an antenna) in the first device, where the information is sent by another network element to the first device. Alternatively, the chip in the first device sends information to another module (for example, a radio frequency module or an antenna) in another network element, where the information is sent by the first device to the another network element.

When the communication apparatus is a chip used in an LMF network element, the chip in the LMF network element implements a function of the LMF network element in the foregoing method embodiments. The chip in the LMF network element receives information from another module (for example, a radio frequency module or an antenna) in the LMF network element, where the information is sent by another network element to the LMF network element. Alternatively, the chip in the LMF network element sends information to another module (for example, a radio frequency module or an antenna) in another network element, where the information is sent by the LMF network element to the another network element.

When the communication apparatus is a chip used in a second device, the chip in the second device implements a function of the second device in the foregoing method embodiments. The chip in the second device receives information from another module (for example, a radio frequency module or an antenna) in the second device, where the information is sent by another network element to the second device. Alternatively, the chip in the second device sends information to another module (for example, a radio frequency module or an antenna) in another network element, where the information is sent by the second device to the another network element.

When the communication apparatus is a chip used in a first terminal device, the chip of the first terminal device implements a function of the first terminal device in the foregoing method embodiments. The chip in the first terminal device receives information from another module (for example, a radio frequency module or an antenna) in the first terminal device, where the information is sent by another network element to the first terminal device. Alternatively, the chip in the first terminal device sends information to another module (for example, a radio frequency module or an antenna) in another network element, where the information is sent by the first terminal device to the another network element.

When the communication apparatus is a chip used in an access network device, the chip in the access network device implements a function of the access network device in the foregoing method embodiments. The chip in the access network device receives information from another module (for example, a radio frequency module or an antenna) in the access network device, where the information is sent by another network element to the access network device. Alternatively, the chip in the access network device sends information to another module (for example, a radio frequency module or an antenna) in another network element, where the information is sent by the access network device to the another network element.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted by using a computer-readable storage medium. The computer-readable storage medium may be any usable medium accessible by the computer, or a data storage device such as a server integrating one or more usable media. The usable medium may be a magnetic medium, for example, a floppy disk, a hard disk drive, or a magnetic tape; may be an optical medium, for example, a DVD; or may be a semiconductor medium, for example, a solid-state drive (solid-state disk, SSD).

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that in this application, both "when ..." and "if" mean that a network element performs corresponding processing in an objective situation, and are not intended to limit time. The terms do not mean that the network element is required to have a determining action during implementation, and do not mean any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A wireless communication method, wherein the method comprises:
receiving, by a first device, a first request message from a second device, wherein the first request message is used to request relative location information between a first terminal device and a second terminal device, or the first request message is used to request measurement information between the first terminal device and the second terminal device, the measurement information is used to determine the relative location information, and the relative location information comprises at least one of the following location information: relative positioning information, relative distance information, and relative angle information; and
sending, by the first device, the relative location information or the measurement information to the second device in response to the first request message.

2. The method according to claim 1, wherein the first device is the first terminal device or the second terminal device, and when the first device sends the relative location information to the second device, the method further comprises:
obtaining, by the first device, the measurement information; and determining, by the first device, the relative location information based on the measurement information; or
obtaining, by the first device, the measurement information; sending, by the first device, the measurement information to a location management network element; and receiving, by the first device, the relative location information from the location management network element.

3. The method according to claim 2, wherein before the sending, by the first device, the measurement information to a location management network element, the method further comprises:
sending, by the first device, a second request message to an AMF network element, wherein the second request message is used to request to determine the relative location information; and
receiving, by the first device, a measurement request message from the location management network element, wherein the measurement request message is used to request the measurement information.

4. The method according to claim 1, wherein the first device is an AMF network element, and the method further comprises:
sending, by the first device, a third request message to a location management network element based on the first request message, wherein the third request message is used to request the relative location information or the measurement information; and receiving, by the first device, the relative location information or the measurement information that is from the location management network element in response to the third request message; or
sending, by the first device, a fourth request message to the first terminal device; and receiving, by the first device, the relative location information or the measurement information that is from the first terminal device in response to the fourth request message.

5. The method according to claim 4, wherein before the sending, by the first device, a fourth request message to the first terminal device, the method further comprises:
determining, by the first device, a discovery mode and/or a discovery role based on the first request message, wherein the discovery mode is discovery through an interface between the first terminal device and the second terminal device, the discovery role indicates roles of the first terminal device and the second terminal device in the discovery mode, and the fourth request message carries the discovery mode and/or the discovery role.

6. The method according to claim 4 or 5, wherein the first request message comprises trigger condition information and action information, the trigger condition information indicates that the first terminal device performs a first action when the relative location information meets a first condition, the action information indicates the first action, and the fourth request message comprises the trigger condition information and the action information.

7. The method according to claim 1, wherein the first device is a GMLC network element, and the method further comprises:
sending, by the first device, a fifth request message to an AMF network element based on the first request message, wherein the fifth request message is used to request the relative location information or the measurement information; and
receiving, by the first device, the relative location information or the measurement information that is from the AMF network element in response to the fifth request message.

8. The method according to claim 7, wherein the method further comprises:
determining, by the first device based on the first request message, that the first terminal device is an execution terminal device, wherein the execution terminal device is a terminal device that communicates with a core network element in a process of obtaining the relative location information.

9. The method according to claim 8, wherein the first request message comprises indication information, and the indication information indicates that the first terminal device is the execution terminal device.

10. The method according to any one of claims 4 to 9, wherein the method further comprises:
receiving, by the first device, capability information from the first terminal device, wherein the capability information indicates at least one of the following information: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

11. The method according to any one of claims 1 to 10, wherein the first request message comprises at least one of the following information: identification information of the first terminal device, identification information of the second terminal device, measurement requirement information, a measurement information type, measurement type information, the trigger condition information, and the action information, wherein the measurement information type information indicates that the first request message is used to request to obtain the measurement information or the relative location information, the measurement type information indicates a type of the relative location information, the trigger condition information indicates that the first terminal device performs the first action when the relative location information meets the first condition, and the action information indicates the first action.

12. A wireless communication method, wherein the method comprises:
sending, by a location management network element, a request message to a first terminal device, wherein the request message is used to request to obtain measurement information or relative location information between the first terminal device and a second terminal device through an interface between the first terminal device and the second terminal device, wherein the relative location information comprises at least one of the following location information: relative positioning information, relative distance information, and relative angle information; and
receiving, by the location management network element, the measurement information or the relative location information that is from the first terminal device in response to the request message.

13. The method according to claim 12, wherein when the location management network element receives the measurement information, the method further comprises:
determining, by the location management network element, the relative location information based on the measurement information.

14. The method according to claim 12 or 13, wherein before the sending, by a location management network element, a request message to a first terminal device, the method further comprises:
determining, by the location management network element, a discovery mode and/or a discovery role, wherein the discovery mode is discovery through the interface between the first terminal device and the second terminal device, the discovery role indicates roles of the first terminal device and the second terminal device in the discovery mode, and the request message carries the discovery mode and/or the discovery role.

15. The method according to any one of claims 12 to 14, wherein before the sending, by a location management network element, a request message to a first terminal device, the method further comprises:
receiving, by the location management network element, a location request message, wherein the location request message is used to request the relative location information.

16. The method according to claim 15, wherein the location request message comprises trigger condition information and action information, the trigger condition information indicates that the first terminal device performs a first action when the relative location information meets a first condition, the action information indicates the first action, and the request message comprises the trigger condition information and the action information.

17. The method according to any one of claims 12 to 16, wherein the method further comprises:
receiving, by the location management network element, capability information from the first terminal device: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

18. The method according to any one of claims 12 to 17, wherein the request message comprises at least one of the following information: ranging indication information, identification information of the second terminal device, a measurement information type, measurement type information, the trigger condition information, the action information, and a discovery role of the first terminal device in the discovery mode, wherein the ranging indication information indicates that ranging is performed through the interface, the measurement information type indicates that the request message is used to request the measurement information or the relative location information, the measurement type information indicates a type of the relative location information, the trigger condition information indicates that the first terminal device performs the first action when the relative location information meets the first condition, and the action information indicates the first action.

19. A wireless communication method, wherein the method comprises:
obtaining, by a first terminal device, measurement information between the first terminal device and a second terminal device through an interface between the first terminal device and the second terminal device; and
obtaining, by the first terminal device, relative location information between the first terminal device and the second terminal device based on the measurement information.

20. The method according to claim 19, wherein the obtaining, by the first terminal device, relative location information comprises:
determining, by the first terminal device, the relative location information based on the measurement information; or
sending, by the first terminal device, the measurement information to an AMF network element; and receiving, by the first terminal device, the relative location information sent by the AMF network element; or
sending, by the first terminal device, a location request message to an AMF network element, wherein the location request message is used to request to determine the relative location information.

21. The method according to claim 19 or 20, wherein before the obtaining, by a first terminal device, measurement information, the method further comprises:
receiving, by the first terminal device, a request message, wherein the request message is used to request to obtain the measurement information or the relative location information through the interface.

22. The method according to claim 21, wherein the request message further comprises trigger condition information and action information, the trigger condition information indicates that the first terminal device performs a first action when the relative location information meets a first condition, the action information indicates the first action, and the method further comprises:
performing, by the first terminal device, the first action when the relative location information meets the first condition.

23. The method according to claim 19 or 20, wherein the method further comprises:
sending, by the first terminal device, capability information, wherein the capability information indicates at least one of the following information: information indicating whether the first terminal device supports obtaining of the measurement information, information indicating whether the first terminal device supports obtaining of the relative location information, a discovery mode supported by the first terminal device, a capability of the first terminal device to communicate through the interface between the first terminal device and the second terminal device, a type of the interface, precision that is of obtaining the measurement information and that is supported by the first terminal device, and precision that is of obtaining the relative location information and that is supported by the first terminal device.

24. The method according to any one of claims 19 to 23, wherein the method further comprises:
receiving, by the first terminal device, a configuration message, wherein the configuration message comprises at least one of the following information: authorized measurement type information, an authorized measurement parameter, an authorized measurement role, an identifier of a user authorized to use the relative location information, an authorized discovery mode, an authorized discovery role, measurement mapping information, the trigger condition information, and the action information, wherein the authorized measurement type information indicates that the first terminal device supports obtaining of the relative location information through an interface between the first terminal device and another terminal device, the authorized measurement role indicates a measurement role when the relative location information is obtained, the authorized discovery mode indicates that a mode of discovering through the interface or a mode of being discovered through the interface is supported, the authorized discovery role indicates that the first terminal device is a discoverer terminal device, a discoveree terminal device, an announcing terminal device, or a monitoring terminal device, the measurement mapping information indicates a mapping relationship between a reference message for obtaining the relative location information and a destination layer 2 identifier, the trigger condition information indicates that the first terminal device performs the first action when the relative location information meets the first condition, and the action information indicates the first action.

25. A wireless communication method, wherein the method comprises:
receiving, by an access network device, authorization indication information from an AMF network element, wherein the authorization indication information indicates that a first terminal device is authorized to obtain measurement information or relative location information through an interface between the first terminal device and a second terminal device, the measurement information is used to determine the relative location information, and the relative location information comprises at least one of the following location information: relative positioning information, relative distance information, and relative angle information; and
allocating, by the access network device based on the authorization indication information, a resource for measurement to the first terminal device.

26. The method according to claim 25, wherein the method further comprises:
receiving, by the access network device, at least one of the following information from the AMF network element: an authorized measurement parameter and an authorized measurement role, wherein the authorized measurement role indicates a measurement role when the relative location information is obtained, and the authorized measurement parameter comprises at least one of the following parameters: a measurement periodicity, precision, latency, and bandwidth.

27. A wireless communication apparatus, comprising a unit configured to perform the method according to any one of claims 1 to 11, a unit configured to perform the method according to any one of claims 12 to 18, a unit configured to perform the method according to any one of claims 19 to 24, or a unit configured to perform the method according to claim 25 or 26.

28. A communication apparatus, comprising a processor, wherein the processor is coupled to a memory, the memory is configured to store a computer program or instructions, and the processor is configured to execute the computer program or the instructions, to enable the method according to any one of claims 1 to 11 to be performed, the method according to any one of claims 12 to 18 to be performed, the method according to any one of claims 19 to 24 to be performed, or the method according to claim 25 or 26 to be performed.

29. A computer-readable storage medium, comprising a computer program, wherein when the computer program is run on a computer, the computer is enabled to perform the method according to any one of claims 1 to 11, the method according to any one of claims 12 to 18, the method according to any one of claims 19 to 24, or the method according to claim 25 or 26.

30. A chip system, comprising a processor, configured to: invoke a computer program from a memory and run the computer program, to enable a communication device installed with the chip system to perform the method according to any one of claims 1 to 11, the method according to any one of claims 12 to 18, the method according to any one of claims 19 to 24, or the method according to claim 25 or 26.
